(19) Europäisches Patentamt
European Patent Office
Office européen des brevets

(11) EP 4 462 449 A1

(12) **EUROPEAN PATENT APPLICATION**
published in accordance with Art. 153(4) EPC

(43) Date of publication:
**13.11.2024 Bulletin 2024/46**

(21) Application number: **22918300.9**

(22) Date of filing: **22.11.2022**

(51) International Patent Classification (IPC):
***H01B 3/30*** (2006.01) ***B32B 27/32*** (2006.01)
***B29C 55/12*** (2006.01) ***C08J 5/18*** (2006.01)
***C08F 222/06*** (2006.01) ***C08F 255/02*** (2006.01)
***C08F 212/08*** (2006.01) ***C08F 230/08*** (2006.01)

(52) Cooperative Patent Classification (CPC):
**B29C 55/12; B32B 27/32; C08F 212/08; C08F 222/06; C08F 230/08; C08F 255/02; C08J 5/18; H01B 3/30**

(86) International application number:
**PCT/CN2022/133482**

(87) International publication number:
**WO 2023/130848 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.01.2022 CN 202210013459**
**06.01.2022 CN 202210014198**
**08.08.2022 CN 202210945062**
**08.08.2022 CN 202210945889**

(71) Applicants:
- **CHINA PETROLEUM & CHEMICAL CORPORATION**
  **Chaoyang District**
  **Beijing 100728 (CN)**
- **Sinopec (Beijing) Research Institute of Chemical Industry Co., Ltd.**
  **Beijing 100013 (CN)**
- **Tsinghua University**
  **Haidian District**
  **Beijing 100084 (CN)**

(72) Inventors:
- **ZHANG, Yaru**
  **Beijing 100013 (CN)**
- **LI, Qi**
  **Beijing 100084 (CN)**
- **ZHANG, Qi**
  **Beijing 100013 (CN)**
- **YUAN, Hao**
  **Beijing 100013 (CN)**
- **HE, Jinliang**
  **Beijing 100084 (CN)**
- **SHAO, Qing**
  **Beijing 100013 (CN)**
- **LI, Junluo**
  **Beijing 100084 (CN)**
- **QUAN, Hui**
  **Beijing 100013 (CN)**
- **WANG, Mingti**
  **Beijing 100013 (CN)**
- **HU, Jun**
  **Beijing 100084 (CN)**
- **LI, Juan**
  **Beijing 100013 (CN)**
- **GAO, Dali**
  **Beijing 100013 (CN)**
- **ZHANG, Longgui**
  **Beijing 100013 (CN)**
- **HU, Shixun**
  **Beijing 100084 (CN)**
- **LU, Hongchao**
  **Beijing 100013 (CN)**
- **XIA, Lidong**
  **Beijing 100013 (CN)**

(74) Representative: **Hoffmann Eitle**
**Patent- und Rechtsanwälte PartmbB**
**Arabellastraße 30**
**81925 München (DE)**

(54) **BIAXIALLY ORIENTED POLYPROPYLENE DIELECTRIC FILM, MODIFIED POLYPROPYLENE MATERIAL AND USE THEREOF**

EP 4 462 449 A1

(57) The invention belongs to the field of polymers, and relates to biaxially oriented polypropylene dielectric film, a modified polypropylene material and use thereof. The preparation raw materials of the biaxially oriented polypropylene dielectric film comprise a modified polypropylene grafted with an alkenyl-containing functional monomer. The modified polypropylene grafted with an alkenyl-containing functional monomer comprises a structural unit derived from polypropylene as a matrix phase and a structural unit derived from an alkenyl-containing functional monomer as a dispersion phase. The ash content of the modified polypropylene grafted with an alkenyl-containing functional monomer is less than 50 ppm. In the modified polypropylene grafted with an alkenyl-containing functional monomer, the mass ratio of the structure unit which is derived from an alkenyl-containing functional monomer and in a grafted state to the structure unit which is derived from an alkenyl-containing functional monomer and in a self-polymerization state is greater than or equal to 1.0. D50 of the dispersion phase is less than 450 nm. The biaxially oriented polypropylene dielectric film of the present invention can keep good dielectric performance and energy storage performance at a relatively high working temperature, and is suitable for high-temperature and high-operation field intensity working conditions.

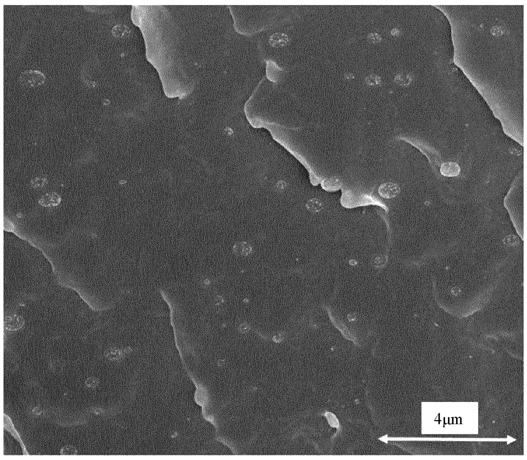


Fig. 1

## Description

## Technical Field

The invention belongs to the field of polymers, in particular relates to a biaxially oriented polypropylene dielectric film with high working temperature, a modified polypropylene material for preparing the dielectric film, use of the biaxially oriented polypropylene dielectric film and the modified polypropylene material in a high-temperature energy storage dielectric medium, and a polypropylene capacitor film and a polypropylene electrical film with high working temperature.

## Background art

Energy is power of modern society development. In recent years, with the rapid development of new energy, aerospace, underground resource exploitation, national defense and military industry and other scientific and technological fields, not only does the demand for dielectric capacitors increase year by year, but it is also required that they can be used under more severe temperature conditions. However, thin film capacitors based on polymer dielectric materials have poor thermal stability and cannot stably operate in high temperature environments. Especially under the action of high electric field, the temperature rise will lead to an exponential increase in the leakage current inside the polymer dielectric medium, resulting in a sharp decline in charge and discharge efficiency and energy storage density, which cannot meet the application requirements. More seriously, the leakage current is converted into joule heat, so that the temperature of capacitors continuously rises, eventually causing damage of them.

Biaxially oriented polypropylene (BOPP) is a polymer film capacitor dielectric material which has the highest commercialization degree and the most extensive application at present, is featured with excellent comprehensive performance and mature large-scale preparation process, and has been widely applied to electric automobiles, wind power, photovoltaics, illumination, railway locomotives and other industries at present.

However, polypropylene film capacitors have an inherent disadvantage of poor dielectric energy storage performance and greatly reduced reliability under high temperature conditions. For example, at room temperature, BOPP can achieve charge and discharge efficiencies as high as 95% or more even near its breakdown field strength, but at 120°C, its efficiencies drop to about 70%. This not only reduces its energy storage density significantly, but also generates a large amount of waste heat that accumulates inside the device, eventually leading to overheating damage (thermal runaway) of the device.

At present, there are two main methods for increasing the working temperature of the polymer capacitor film from the material perspective. A first method is to improve the thermal stability of the polymer dielectric material, i.e. to synthesize a polymer dielectric material with a high glass transition temperature ($T_g$). A second method is to introduce a second phase filler into a polymer medium material to prepare a composite material, so that the leakage current of the polymer under the action of high temperature and high electric field is suppressed by utilizing the capture and scattering effects of filler particles on carriers. However, both methods have the problems of complex preparation process and difficulty in large-scale industrial production.

Therefore, it is necessary to find a novel modified polypropylene composition with obvious ability to regulate and contaol dielectric energy storage characteristic, simple preparation process and suitable for practical engineering application.

Grafting modification is a common method for functionalization of polypropylene. The commonly used methods include melt grafting and solid phase grafting. Melt grafting is simple in equipment and low in cost, but is featured with high reaction temperature, difficult control of the process, more byproducts and less applicable monomer types. At present, it is only used for the preparation of anhydride-based or a few acrylate-based graft compatibilizers. Solid phase grafting is featured with reaction temperature below the melting point of polypropylene, less side reaction, high grafting efficiency and wide scope of applicable grafting monomers. For example, Y Pan et al, in "Solid-phase grafting of glycidyl methacrylate onto polypropylene" (Journal of Applied Polymer Science, 1997, 65 (10): 1905-1912), studied the reaction conditions of solid phase grafting of polypropylene with glycidyl methacrylate (GMA), and pointed out that the influencing factors of solid phase grafting and melt grafting are greatly different. Suspension grafting is a special solid phase grafting, which, by introducing an aqueous phase medium as a dispersing agent into a reaction system, further decreases the reaction temperature, improves the grafting uniformity, and reduces the generation of byproducts. In addition, Li Qiaojun et al, in "Studies on Suspension Grafting of Styrene onto Polypropylene" (Synthetic Resins and Plastics, 1996, 13 (1): 7-10), discussed the reaction conditions and influencing factors of suspension grafting of polypropylene with styrene. Zhu Baodong et al, in "Grafting of Styrene and Maleic Anhydride onto Polypropylene in Water Suspension System" (Modem Plastics Processing and Applications, 2009, 5: 3), reported that a polypropylene double monomer graft with a grafting ratio of 8.97% was obtained by aqueous suspension grafting. At present, there is no report on solid phase or suspension grafting modified polypropylene as the main material of dielectric energy storage.

It is a common method to improve the thermal oxidative aging resistance of polypropylene by means of

antioxidant compounding. CN111378229A discloses long-term thermal aging resistant polypropylene composition and preparation method thereof, wherein the composition comprises 84.55-57.9% of polypropylene, 15-40% of talcum powder, 0.1-0.3% of a main antioxidant, 0.1-0.3% of an auxiliary antioxidant, 0.05-0.2% of a hindered amine antioxidant, 0.1-0.3% of a thioester antioxidant and 0.1-1% of an acid acceptor. CN202011292440.0 discloses a polypropylene material with low density, high light transmittance and long-term thermo-oxidative aging resistance, which comprises a main antioxidant that is a compound of a high molecular weight hindered phenol antioxidant and a low molecular weight hindered phenol antioxidant.

**Contents of the invention**

The invention aims to provide a biaxially oriented polypropylene dielectric film with high working temperature, a novel modified polypropylene material grafted with an alkenyl-containing functional monomer. The modified polypropylene material can be used to prepare a polypropylene dielectric film by a biaxial stretching process. The polypropylene dielectric film and the modified polypropylene material can maintain high energy storage efficiency and energy storage density at higher working temperature.

A first aspect of the invention is to provide a biaxially oriented polypropylene dielectric film with high working temperature, the raw material for preparing the biaxially oriented polypropylene dielectric film comprising a modified polypropylene grafted with an alkenyl-containing functional monomer;

the modified polypropylene grafted with an alkenyl-containing functional monomer comprises structural units derived from polypropylene as a matrix phase and structural units derived from the alkenyl-containing functional monomer as a dispersion phase; the modified polypropylene grafted with an alkenyl-containing functional monomer has an ash content of less than 50 ppm, preferably less than 36 ppm, and more preferably less than 30 ppm; the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is more than or equal to 1.0; the D50 of the dispersion phase is less than 450 nm, preferably 50-400 nm.

The maximum working temperature of the biaxially oriented polypropylene dielectric film is ≥ 100°C, preferably 110-160°C, and more preferably 120-145°C.

The biaxially oriented polypropylene dielectric film has at least one of the following characteristics:

- the breakdown field strength $E_g$ at 120°C is ≥ 500 MV/m, preferably 550-800 MV/m;
- the direct current volume resistivity $\rho_{vg}$ at 120°C and 200 MV/m field strength is ≥ $6.0\times10^{13}$ Ω·m, preferably $1.0\times10^{14}$ Ω·m -1.0 $\times10^{20}$ Ω·m, preferably $1.5\times10^{14}$ Ω·m-0.9 $\times10^{20}$ Ω·m, more preferably $2.0\times10^{14}$ Ω·m-1.0 $\times10^{17}$ Ω·m;
- the dielectric constant at 120°C and 100 Hz is more than 2.25, preferably 2.26-2.65;
- the dielectric loss at 120°C and 100 Hz is less than 1.55E-3, preferably less than 1.5E-3, preferably less than or equal to 1.0E-3, more preferably 1.0E-6 to 1.3E-3, and further preferably 1.0E-6 to 9E-4;
- the energy storage density at 120°C and 300 MV/m is more than 0.720 J/cm$^3$, preferably 0.740-2.0 J/cm$^3$, preferably more than 0.780 J/cm$^3$, more preferably 0.780-2.0 J/cm$^3$, and further preferably 0.80-2.0 J/cm$^3$;
- the energy storage efficiency at 120°C and 300 MV/m is more than 90.0%, and preferably 92.0-99.0%.

The biaxially oriented polypropylene dielectric film has at least one of the following characteristics: the tensile strength in machine direction is ≥140 MPa, and preferably 140-170 MPa; the tensile strength in transverse direction is ≥200 MPa, and preferably 205-250 MPa; the elongation at break in machine direction is ≥ 210%, preferably ≥ 225%; the elongation at break in transverse direction is ≥60%, preferably ≥62%; the thickness is 0.5-15 μm, preferably 4-10 μm.

A second aspect of the invention is to provide a modified polypropylene material useful for the preparation of dielectric films, the modified polypropylene material comprising a modified polypropylene grafted with an alkenyl-containing functional monomer; wherein the modified polypropylene grafted with an alkenyl-containing functional monomer comprises structural units derived from polypropylene as a matrix phase and structural units derived from the alkenyl-containing functional monomer as a dispersion phase; the modified polypropylene grafted with an alkenyl-containing functional monomer has an ash content of less than 50 ppm, preferably less than 36 ppm, and more preferably less than 30 ppm; the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is more than or equal to 1.0; the D50 of the dispersion phase is less than 450 nm, preferably 50-400 nm.

The maximum working temperature of the modified polypropylene material is ≥ 100°C, preferably 110-160°C, and more preferably 120-145°C.

The modified polypropylene material has at least one of the following characteristics:

- the breakdown field strength $E_g$ at 120°C is ≥ 500 MV/m, preferably 550-800 MV/m;
- the direct current volume resistivity $\rho_{vg}$ at 120°C and 200 MV/m field strength is ≥ $6.0\times10^{13}$ Ω·m, preferably $1.0\times10^{14}$ Ω·m -1.0 $\times10^{20}$ Ω·m, preferably $1.5\times10^{14}$ Ω·m-0.9 $\times10^{20}$ Ω·m, more preferably $2.0\times10^{14}$ Ω·m-1.0 $\times10^{17}$ Ω·m;
- the dielectric constant at 120°C and 100 Hz is more than 2.25, preferably 2.26-2.65;
- the dielectric loss at 120°C and 100 Hz is less than 1.55E-3, preferably less than 1.5E-3, preferably less than or equal to 1.0E-3, more preferably 1.0E-6 to 1.3E-3, and further preferably 1.0E-6 to 9E-4;
- the energy storage density at 120°C and 300 MV/m is more than 0.720 J/cm$^3$, preferably 0.740-2.0 J/cm$^3$, preferably more than 0.780 J/cm$^3$, more preferably 0.780-2.0 J/cm$^3$, and further preferably 0.80-2.0 J/cm$^3$;
- the energy storage efficiency at 120°C and 300 MV/m is more than 90.0%, and preferably 92.0-99.0%.

A third aspect of the invention is to provide use of the biaxially oriented polypropylene dielectric film or the modified polypropylene material described above in an energy storage dielectric medium, in particular a high temperature energy storage dielectric medium.

A fourth aspect of the invention is to provide a polypropylene capacitor film, which is one or more layers, wherein at least one layer is the biaxially oriented polypropylene dielectric film as described above, or wherein at least one layer is made from raw materials containing the modified polypropylene material as described above, preferably by biaxial stretching, and preferably wherein at least one layer is made from the modified polypropylene material as described above by biaxial stretching.

A fifth aspect of the invention is to provide a polypropylene electrical film, which is one or more layers, wherein at least one layer is the biaxially oriented polypropylene dielectric film as described above, or wherein at least one layer is made from raw materials containing the modified polypropylene material as described above, preferably by biaxial stretching, and preferably wherein at least one layer is made from the modified polypropylene material as described above by biaxial stretching.

The biaxially oriented polypropylene dielectric film, the modified polypropylene material, the polypropylene capacitor film and the polypropylene electrical film have wide working temperature range, and in particular can keep good dielectric property and energy storage property at higher working temperature, so they are especially suitable for working conditions of high temperature and high operating field strength. The biaxially oriented polypropylene dielectric film, and the high-performance polypropylene capacitor film and polypropylene electrical film have the advantage of good tensile property, can give consideration to both mechanical property and electrical property at a higher working temperature, and is suitable for working conditions of high temperature and high operating field strength.

Additional features and advantages of the invention will be set forth in the detailed description of specific embodiments which follows.

**Brief description of the figures**

Exemplary embodiments of the invention will be described in more detail by referring to the figures.

FIG. 1 is a photograph showing the microstructure of a sample of the modified polypropylene of Example 1 under an electron microscope of 20000 times, in which the spherical dispersion phase is an aggregate of styrene structural units.

FIG. 2 is a photograph showing the microstructure of a sample of the modified polypropylene of Example 2 under an electron microscope of 20000 times.

FIG. 3 is a photograph showing the microstructure of a sample of the modified polypropylene of Example 3 under an electron microscope of 20000 times.

FIG. 4 is a photograph showing the microstructure of a sample of the modified polypropylene of Example 10 under an electron microscope of 20000 times.

FIG. 5 is a photograph showing the microstructure of a sample of the modified polypropylene of Comparative Example 1 under an electron microscope of 20000 times, with no visible dispersion phase.

FIG. 6 shows the TSDC test results for the products of Example 15 and Comparative Example 7.

**Detailed description of the invention**

The following is a detailed description of specific embodiments of the invention. It should be understood that the specific embodiments described herein are only to illustrate and explain, not to limit, the invention.

The invention provides a biaxially oriented polypropylene dielectric film, the raw material for preparing the biaxially oriented polypropylene dielectric film comprising a modified polypropylene grafted with an alkenyl-containing functional monomer; the modified polypropylene grafted with an alkenyl-containing functional monomer comprises structural units derived from polypropylene as a matrix phase and structural units derived from the alkenyl-containing

functional monomer as a dispersion phase; the modified polypropylene grafted with an alkenyl-containing functional monomer has an ash content of less than 50 ppm, preferably less than 36 ppm, and more preferably less than 30 ppm; the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is more than or equal to 1.0; the D50 of the dispersion phase is less than 450 nm, preferably 50-400 nm.

The maximum working temperature of the biaxially oriented polypropylene dielectric film is ≥ 100°C, preferably 110-160°C, and more preferably 120-145°C.

The dielectric film of the invention has the above-described excellent dielectric properties measured at 120°C, for example, the energy storage efficiencies at 120°C and 300 MV/m of the films measured in the examples described later are all 90% or more, and the upper temperature limit at which the energy storage efficiency reaches 90% can be taken as an indication of the maximum working temperature, whereby it can be confirmed that the dielectric film of the invention has the maximum working temperature of at least 120°C.

According to a preferred embodiment of the invention, the biaxially oriented polypropylene dielectric film has at least one of the following characteristics:

- the breakdown field strength $E_g$ at 120°C is ≥ 500 MV/m, preferably 550-800 MV/m;
- the direct current volume resistivity $\rho_{vg}$ at 120°C and 200 MV/m field strength is ≥ $6.0\times10^{13}$ $\Omega\cdot$m, preferably $1.0\times10^{14}$ $\Omega\cdot$m -$1.0\times10^{20}$ $\Omega\cdot$m, preferably $1.5\times10^{14}$ $\Omega\cdot$m-$0.9\times10^{20}$ $\Omega\cdot$m, more preferably $2.0\times10^{14}$ $\Omega\cdot$m-$1.0\times10^{17}$ $\Omega\cdot$m, for example, $1.0\times10^{15}$ $\Omega\cdot$m, $1.0\times10^{16}$ $\Omega\cdot$m, and any value in this range;
- the dielectric constant at 120°C and 100 Hz is more than 2.25, preferably 2.26-2.65;
- the dielectric loss at 120°C and 100 Hz is less than 1.55E-3, preferably less than 1.5E-3, preferably less than or equal to 1.0E-3, more preferably 1.0E-6 to 1.3E-3, and further preferably 1.0E-6 to 9E-4;
- the energy storage density at 120°C and 300 MV/m is more than 0.720 J/cm$^3$, preferably 0.740-2.0 J/cm$^3$, more preferably 0.780-2.0 J/cm$^3$, and further preferably 0.80-2.0 J/cm$^3$;
- the energy storage efficiency at 120°C and 300 MV/m is more than 90.0%, and preferably 92.0-99.0%.

The biaxially oriented polypropylene dielectric film of the invention has the following characteristics: the tensile strength in machine direction is ≥140 MPa, and preferably 140-170 MPa; the tensile strength in transverse direction is ≥200 MPa, and preferably 205-250 MPa; the elongation at break in machine direction is ≥ 210%, preferably ≥ 225%; the elongation at break in transverse direction is ≥60%, preferably ≥62%; the thickness is 0.5-15 μm, preferably 4-10 μm.

According to one embodiment of the invention, the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is 1.1-1.0, preferably 1.2-6.

According to another embodiment of the invention, the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is more than or equal to 1.5, preferably more than or equal to 2.

According to the invention, preferably, the modified polypropylene grafted with an alkenyl-containing functional monomer has at least one of the following characteristics: the melt flow rate at the load of 2.16 kg at 230°C is 1-10 g/10 min, preferably 1.5-8 g/10 min, and further preferably 2-5 g/10 min; the melting temperature $T_m$ is 155-168°C, and preferably 157-165°C; the flexural modulus is 1400-2000 MPa, preferably 1500-1800 MPa.

The term "structural unit" means that it is a part of the modified polypropylene, and the form thereof is not limited. Specifically, the term "structural units derived from polypropylene" refers to products formed from polypropylene, including not only those in "radical" form but also those in "polymer" form. The term "structural units derived from an alkenyl-containing functional monomer" refers to products formed from an alkenyl-containing functional monomer, including not only those in "radical" form, but also those in the form of "self-polymerized state". Said "structural unit" may be a repeating unit or a non-repeating independent unit. The structural units derived from an alkenyl-containing functional monomer and "in a grafted state" refers to the structural units derived from the alkenyl-containing functional monomer which form a covalent bond (graft) with the polypropylene.

Specifically, the polypropylene dielectric energy storage material is in a sea-island structure, as shown in FIG. 1. Where "sea" is a matrix phase, formed from the structural units derived from the polypropylene, and "island" is a dispersion phase formed from the structural units derived from an alkenyl-containing functional monomer.

Compared with inorganic filler doping technology, the graft modification can lead to the formation of a uniformly distributed nano-scale dispersion phase in the composite material, thereby avoiding the problems of difficult addition and difficult dispersion of the inorganic filler and the like. Compared with surface modification, the process of bulk modification is simpler, the dispersion phase is uniformly dispersed, the structure is stable, and the functional monomer layer is not easy

to fall off due to external force in use.

According to the invention, preferably, the modified polypropylene is prepared by grafting reaction, preferably suspension grafting reaction, of polypropylene and an alkenyl-containing functional monomer. The grafting reaction of the invention is a radical polymerization reaction, and thus, the term "in a grafted state" means a state in which a monomer forms a connection with another reactant after radical polymerization. The term "self-polymerized state" refers to a state where a monomer forms a self-polymer and is not connected (grafted) to another reactant. The connection includes both direct and indirect connections.

The alkenyl groups in the alkenyl-containing functional monomer of the invention are used for grafting with polypropylene, and therefore, alkenyl-containing functional monomers having alkenyl groups at reactable positions are all suitable for use in the invention.

Specifically, the alkenyl-containing functional monomer is at least one selected from monomers having a structure represented by the formula 1,

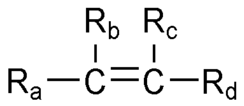

formula 1

In the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano, substituted or unsubstituted silyl; $R_a$ and $R_d$ optionally form a ring.

According to a preferred embodiment of the invention, $R_b$, $R_c$, $R_d$ are each independently selected from H, substituted or unsubstituted $C_1$-$C_6$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano, substituted or unsubstituted $C_3$-$C_{20}$ silyl; the substituent group is halogen, -OH, $-NH_2$, =O, $C_1$-$C_{12}$ alkyl, $C_3$-$C_6$ cycloalkyl, $C_1$-$C_{12}$ alkoxy, $C_1$-$C_{12}$ acyloxy; $R_a$ and $R_d$ optionally taken together with the double bond form a 4-6 membered heterocyclic ring.

According to a more preferred embodiment of the invention, wherein, $R_b$, $R_c$, $R_d$ are each independently selected from H, substituted or unsubstituted $C_1$-$C_6$ alkyl;

$R_a$ is at least one selected from a group represented by formula 2, a group represented by formula 3, a group represented by formula 4, a group represented by formula 5, a group represented by formula 6 and a heterocyclic group;

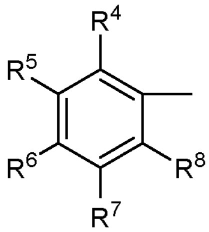

formula 2

In the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

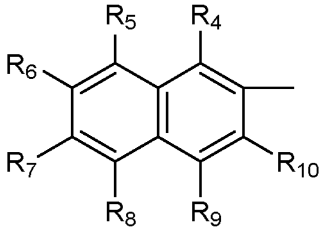

formula 3

In the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

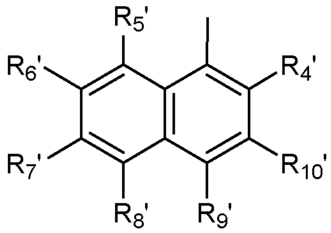

formula 4

In the formula 4, $R_4'$-$R_{10}'$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4'$-$R_{10}'$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

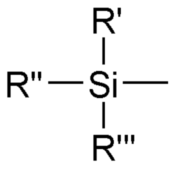

formula 5

In the formula 5, R', R", R‴ are each independently selected from substituted or unsubstituted $C_1$-$C_{12}$ linear alkyl, substituted or unsubstituted $C_3$-$C_{12}$ branched alkyl, substituted or unsubstituted $C_1$-$C_{12}$ alkoxy, substituted or unsubstituted $C_1$-$C_{12}$ acyloxy; preferably, $R_1$ is $C_2$-$C_6$ alkenyl, preferably monounsaturated alkenyl; $R_2$, $R_3$, $R_4$ are each independently selected from substituted or unsubstituted $C_1$-$C_6$ linear alkyl, substituted or unsubstituted $C_3$-$C_6$ branched alkyl, substituted or unsubstituted $C_1$-$C_6$ alkoxy, substituted or unsubstituted $C_1$-$C_6$ acyloxy;

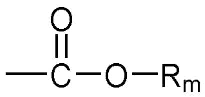

formula 6

In the formula 6, $R_m$ is selected from hydrogen and/or the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is at least one selected from halogen, amino and hydroxy;

the heterocyclic group is selected from imidazolyl, pyrazolyl, carbazolyl, pyrrolidinonyl, pyridyl, piperidinyl, caprolactamyl, pyrazinyl, thiazolyl, purinyl, morpholinyl, oxazolinyl.

According to a specific embodiment of the invention, the alkenyl-containing functional monomer is a styrenic monomer, the styrenic monomer is at least one selected from styrene, α-methylstyrene, 1-vinyl naphthalene, 2-vinyl naphthalene, mono- or polysubstituted styrene, mono- or polysubstituted α-methylstyrene, mono- or polysubstituted 1-vinyl naphthalene and mono- or polysubstituted 2-vinyl naphthalene; the substituent group preferably is at least one selected from halogen, hydroxy, amino, phosphoric group, sulfonic group, $C_1$-$C_8$ linear alkyl, $C_3$-$C_8$ branched alkyl or cycloalkyl, $C_1$-$C_6$ linear alkoxy, $C_3$-$C_8$ branched alkoxy or cycloalkoxy, $C_1$-$C_8$ linear ester group, $C_3$-$C_8$ branched ester group or cyclic ester group, $C_1$-$C_8$ linear amine group and $C_3$-$C_8$ branched amine group or cyclic amine group; preferably, the styrenic monomer is at least one selected from styrene, α-methylstyrene, 2-methylstyrene, 3-methylstyrene and 4-methylstyrene.

According to a specific embodiment of the invention, the alkenyl-containing functional monomer is an alkenyl-containing silane monomer, the alkenyl-containing silane monomer is at least one selected from vinyltriethoxysilane,

vinyltrimethoxysilane, vinyltriisopropoxysilane, vinyltri-tert-butoxysilane, vinyltriacetoxysilane, methylvinyldimethoxysilane, ethylvinyldiethoxysilane, allyltriethoxysilane, allyltrimethoxysilane, allyltriisopropoxysilane, vinyltris (β-methoxyethoxy) silane, allyltris (β-methoxyethoxy) silane, allyltri-tert-butoxysilane, allyltriacetoxysilane, methylallyldimethoxysilane and ethylallyldiethoxysilane.

According to a specific embodiment of the invention, the alkenyl-containing functional monomer is an acrylate monomer and/or an acrylic monomer, preferably, the acrylate monomer is at least one selected from methyl (methyl) acrylate, sec-butyl (methyl) acrylate, ethyl (methyl) acrylate, n-butyl (methyl) acrylate, isobutyl (methyl) acrylate, tert-butyl (methyl) acrylate, isooctyl (methyl) acrylate, dodecyl (methyl) acrylate, cocinin (methyl) acrylate, octadecyl (methyl) acrylate, dimethylaminoethyl (methyl) acrylate, diethylaminoethyl (methyl) acrylate, dimethylaminopropyl (methyl) acrylate, and glycidyl (methyl) acrylate. Preferably, the acrylic monomer is at least one selected from acrylic acid, methacrylic acid and 2-ethylacrylic acid.

In the invention, the $C_3$-$C_{12}$ epoxyalkylalkyl refers to epoxyalkyl-substituted alkyl having 3 to 12 carbon atoms, e.g., oxiranylmethyl.

According to a specific embodiment of the invention, the alkenyl-containing functional monomer is an alkenyl-containing heterocyclic monomer. The alkenyl-containing heterocyclic monomer of the invention may be any alkenyl-containing heterocyclic compound capable of undergoing radical polymerization, which may be at least one selected from alkenyl substituent-containing imidazoles, alkenyl substituent-containing pyrazoles, alkenyl substituent-containing carbazoles, alkenyl substituent-containing pyrrolidones, alkenyl substituent-containing pyridines or pyridiniums, alkenyl substituent-containing piperidines, alkenyl substituent-containing caprolactams, alkenyl substituent-containing pyrazines, alkenyl substituent-containing thiazoles, alkenyl substituent-containing purines, alkenyl substituent-containing morpholines and alkenyl substituent-containing oxazolines; preferably, the alkenyl-containing heterocyclic monomer is a monoalkenyl-containing heterocyclic monomer.

Specifically, the alkenyl-containing heterocyclic monomer is at least one selected from: 1-vinyl imidazole, 2-methyl-1-vinyl imidazole, N-allyl imidazole, 1-vinyl pyrazole, 3-methyl-1-vinyl pyrazole, vinyl carbazole, N-vinyl pyrrolidone, 2-vinyl pyridine, 3-vinyl pyridine, 4-vinyl pyridine, 2-methyl-5-vinyl pyridine, vinyl pyridine N oxide, vinyl pyridinium, vinyl piperidine, N-vinyl caprolactam, 2-vinyl pyrazine, N-vinyl piperazine, 4-methyl-5-vinyl thiazole, N-vinyl purine, vinyl morpholine and vinyl oxazoline.

According to the invention, the alkenyl-containing functional monomer may also be at least one selected from maleic anhydride, maleimide and derivatives thereof, itaconic anhydride, and α-methylene-γ-butyrolactone. Preferably, the alkenyl-containing functional monomer is maleic anhydride.

In the invention, various alkenyl-containing functional monomers can be used alone or in combination of one or more.

Preferably, the content of the structural units derived from the alkenyl-containing functional monomer in the modified polypropylene grafted with an alkenyl-containing functional monomer is 1.0-28 wt%, preferably 1.5-24 wt%, and more preferably 2.0-20 wt%.

The polypropylene moiety of the modified polypropylene in the invention may also refer to ungrafted polypropylene, which may be propylene homopolymer or propylene copolymer containing ethylene or butylene units. More preferably, the polypropylene powder is homo-polypropylene having an isotacticity of more than 96%, preferably more than 96.5%; or propylene copolymer having a total content of ethylene units and butene units of less than 3.0 mol%, for example, 2.5 mol%, 2 mol%, 1.5 mol%, 1 mol%, 0.9 mol%, 0.8 mol%, 0.7 mol%, 0.6 mol%, 0.5 mol%, 0.4 mol%, 0.3 mol%, 0.2 mol%, 0.1 mol%, based on the total molar content of the structural units. Preferably, the propylene copolymer has a total content of ethylene units and butene units of more than 0 and less than 0.1 mol%, or more than 0.1 mol% and less than or equal to 3.0 mol%.

According to the invention, in order to obtain the modified polypropylene having the aforementioned characteristics, it is preferred to use a polypropylene having the following characteristics: the particle size is 16-50 meshes; the ash content is less than 55 ppm, preferably less than 40 ppm, more preferably less than 35 ppm; the flexural modulus is 1400-2000 MPa, preferably 1500-1800 MPa.

In addition to having the above characteristics, the polypropylene may be a homopolypropylene or a propylene copolymer, and preferably has at least one of the following characteristics:

- the melt flow rate at the load of 2.16 kg at 230°C is 0.5-10 g/10 min, preferably 1-5 g/10 min, and further preferably 2-4 g/10 min;
- the melting temperature $T_m$ is 150°C or higher, preferably 153-180°C, further preferably 155-167°C;
- the isotacticity is more than 96%, preferably more than 96.5%; or, the total content of ethylene units and butene units is less than 3.0 mol%, preferably more than 0 and less than 0.1 mol%, or more than 0.1 mol% and less than or equal to 3.0 mol%.

The polypropylene powder suitable for the invention is commercially available or can be prepared by the methods

described in Chinese patents CN109694427A, CN109694428A, CN104558813A, CN109912734A, CN111019025A and CN 105431459A.

The modified polypropylene grafted with an alkenyl-containing functional monomer can be prepared by a method comprising the following steps: in the presence of an inert gas, a reaction mixture comprising a polypropylene powder and an alkenyl-containing functional monomer is subjected to grafting reaction, and is optionally washed by a washing solvent, to obtain the modified polypropylene grafted with an alkenyl-containing functional monomer.

The grafting reaction of the invention may be carried out with a reference to various conventional methods in the art, preferably a suspension grafting reaction, for example, formation of active grafting sites on polypropylene in the presence of an alkenyl-containing functional monomer for grafting, or formation of active grafting sites on polypropylene first followed by treatment with a monomer for grafting. The grafting sites may be formed by treatment with a free radical initiator, or by treatment with high energy ionizing radiation or microwaves. The free radicals generated in the polymer as a result of the chemical or radiation treatment form grafting sites on the polymer and initiate the polymerization of the monomer at these sites.

Preferably, the grafting sites are initiated by a free radical initiator and the grafting reaction proceeds further. In this case, the reaction mixture comprises a free radical initiator; further preferably, the free radical initiator is selected from a peroxide-based free radical initiator and/or an azo-based free radical initiator.

Wherein, the peroxide-based radical initiator is preferably at least one selected from the group consisting of dibenzoyl peroxide, dicumyl peroxide, di-tert-butyl peroxide, lauroyl peroxide, dodecyl peroxide, tert-butyl peroxybenzoate, diisopropyl peroxydicarbonate, tert-butyl peroxy (2-ethylhexanoate) and dicyclohexyl peroxydicarbonate; the azo-based radical initiator is preferably azobisisobutyronitrile and/or azobisisoheptonitrile.

More preferably, the grafting sites are initiated by a peroxide-based free radical initiator and the grafting reaction proceeds further.

Furthermore, the grafting reaction of the invention can also be carried out according to the methods described in CN106543369A, CN104499281A, CN102108112A, CN109251270A, CN1884326A and CN 101492517B.

The amount of each component used in the grafting reaction of the invention is not particularly limited on the premise that the above-mentioned product characteristics are satisfied, and specifically, the mass ratio of the free radical initiator to the alkenyl-containing functional monomer can be 0.1-10: 100, preferably 0.5-5: 100. The mass ratio of the alkenyl-containing functional monomer to the polypropylene can be 0.5-25: 100, preferably 1-20: 100.

The invention also has no special limitation on the technical conditions of the grafting reaction, and specifically, the temperature of the grafting reaction can be 30-110°C, and preferably 60-95°C; the time can be 0.5-10 h, and preferably 1-6 h.

In the invention, the term "reaction mixture" includes all materials added to the grafting reaction system, and the materials may be added at one time or at different stages of the reaction.

The reaction mixture of the invention may further comprise deionized water as a dispersant. The mass content of the deionized water is 300-800% of the sum of the mass of the polypropylene powder and the alkenyl-containing functional monomer.

The reaction mixture of the invention may further comprise an organic solvent as a solvent for dissolving the solid radical initiator, the organic solvent preferably comprising at least one selected from $C_2$-$C_5$ alcohols, $C_2$-$C_4$ ethers and $C_3$-$C_5$ ketones, more preferably at least one selected from $C_2$-$C_4$ alcohols, $C_2$-$C_3$ ethers and $C_3$-$C_5$ ketones, and most preferably at least one selected from ethanol, diethyl ether and acetone. The mass content of the organic solvent is preferably 1-35% of the mass of the polypropylene powder.

According to one embodiment of the invention, the preparation method of the modified polypropylene grafted with an alkenyl-containing functional monomer comprises the following steps:

a. placing a polypropylene powder in a closed reactor, followed by inert gas replacement;
b. adding a free radical initiator and an alkenyl-containing functional monomer to the closed reactor, and mixing with stirring;
c. adding deionized water, heating the reaction system to the grafting reaction temperature, to carry out the grafting reaction; optionally swelling the reaction system before or after adding deionized water;
d. after the end of the reaction, filtering and optionally drying to obtain a powder;
e. optionally, washing the powder by a washing solvent, filtering and drying;
f. obtaining the modified polypropylene grafted with an alkenyl-containing functional monomer; or

the preparation method of the modified polypropylene grafted with an alkenyl-containing functional monomer comprises the following steps:

a. placing a polypropylene powder in a closed reactor, followed by inert gas replacement;
b. mixing an organic solvent and a free radical initiator, and adding the mixture to the closed reactor;

c. removing the organic solvent, adding an alkenyl-containing functional monomer, and optionally swelling the reaction system;
d. adding deionized water, heating the reaction system to the grafting reaction temperature, to carry out the grafting reaction;
e. after the end of the reaction, filtering and optionally drying to obtain a powder;
f. optionally, washing the powder by a washing solvent, filtering and drying;
g. obtaining the modified polypropylene grafted with an alkenyl-containing functional monomer.

According to one embodiment of the invention, the preparation method of the modified polypropylene grafted with an alkenyl-containing functional monomer comprises the following steps:

Approach I, the preparation method comprises the following steps:

a. placing a polypropylene powder in a closed reactor, followed by inert gas replacement;
b. adding a free radical initiator and an alkenyl-containing functional monomer to the closed reactor, and mixing with stirring;
c. adding deionized water, heating the reaction system to the grafting reaction temperature, to carry out the grafting reaction; optionally swelling the reaction system before or after adding deionized water;
d. after the end of the reaction, filtering and drying to obtain the modified polypropylene grafted with an alkenyl-containing functional monomer.

Approach II, the preparation method comprises the following steps:

a. placing a polypropylene powder in a closed reactor, followed by inert gas replacement;
b. mixing an organic solvent and a free radical initiator, and adding the mixture to the closed reactor;
c. removing the organic solvent, adding an alkenyl-containing functional monomer, and optionally swelling the reaction system;
d. adding deionized water, heating the reaction system to the grafting reaction temperature, to carry out the grafting reaction;
e. after the end of the reaction, filtering and drying to obtain the modified polypropylene grafted with an alkenyl-containing functional monomer.

According to another embodiment of the invention, the preparation method of the modified polypropylene grafted with an alkenyl-containing functional monomer comprises the following steps:

Approach I, the preparation method comprises the following steps:

a. placing a polypropylene powder in a closed reactor, followed by inert gas replacement;
b. adding a free radical initiator and an alkenyl-containing functional monomer to the closed reactor, and mixing with stirring;
c. adding deionized water, heating the reaction system to the grafting reaction temperature, to carry out the grafting reaction; optionally swelling the reaction system before or after adding deionized water;
d. after the end of the reaction, filtering and optionally drying to obtain a powder;
e. washing the powder by a washing solvent, filtering and drying to obtain the modified polypropylene grafted with an alkenyl-containing functional monomer.

Approach II, the preparation method comprises the following steps:

a. placing a polypropylene powder in a closed reactor, followed by inert gas replacement;
b. mixing an organic solvent and a free radical initiator, and adding the mixture to the closed reactor;
c. removing the organic solvent, adding an alkenyl-containing functional monomer, and optionally swelling the reaction system;
d. adding deionized water, heating the reaction system to the grafting reaction temperature, to carry out the grafting reaction;
e. after the end of the reaction, filtering and optionally drying to obtain a powder;
f. washing the powder by a washing solvent, filtering and drying to obtain the modified polypropylene grafted with an alkenyl-containing functional monomer.

According to the method of the invention, the polypropylene powder used may be a directly purchased product with an appropriate particle size, or may be purchased or self-made and then screened. Therefore, the invention may also comprise a step of screening pretreatment of the polypropylene powder. Screening can be accomplished using conventional screening methods. According to a preferred embodiment, the screening pretreatment comprises the steps of screening the powder by using a double-layer vibrating screen or a linear screen with a screen mesh of a corresponding mesh number, and using the polypropylene powder in the middle layer of the screen as a reaction material to obtain a raw material powder with a corresponding particle size range.

According to a more specific embodiment of the invention, the preparation method of the modified polypropylene grafted with an alkenyl-containing functional monomer is selected from one of the following approaches:

Approach I, the preparation method comprises the following steps:

a. screening a powder by using a double-layer vibrating screen or a linear screen with 16-mesh and 48-mesh screens, and using the polypropylene powder in the middle layer of the screen as a reaction material;
b. placing the polypropylene powder in the middle layer of the screen in a closed reactor, followed by inert gas replacement;
c. dissolving a free radical initiator in an alkenyl-containing functional monomer to prepare a solution, adding the solution to the closed reactor filled with the polypropylene, and mixing with stirring;
d. adding deionized water, heating the system to the grafting reaction temperature of 30-110°C, to carry out the reaction for 0.5-10 hours; optionally swelling the reaction system before or after adding deionized water;
e. after the end of the reaction, filtering and drying to obtain the modified polypropylene grafted with an alkenyl-containing functional monomer.

Approach II, the preparation method comprises the following steps:

a. screening a powder by using a double-layer vibrating screen or a linear screen with 16-mesh and 48-mesh screens, and using the polypropylene powder in the middle layer of the screen as a reaction material;
b. placing the polypropylene powder in the middle layer of the screen in a closed reactor, followed by inert gas replacement;
c. mixing an organic solvent and a free radical initiator, and adding the mixture to the closed reactor;
c. removing the organic solvent, adding an alkenyl-containing functional monomer, and optionally swelling the reaction system;
d. adding deionized water, heating the system to the grafting reaction temperature of 30-110°C, to carry out the reaction for 0.5-10 hours;
e. after the end of the reaction, filtering and drying to obtain the modified polypropylene grafted with an alkenyl-containing functional monomer.

According to a more specific embodiment of the invention, the preparation method of the modified polypropylene grafted with an alkenyl-containing functional monomer is selected from one of the following approaches:

Approach I, the preparation method comprises the following steps:

a. screening a powder by using a double-layer vibrating screen or a linear screen with 16-mesh and 48-mesh screens, and using the polypropylene powder in the middle layer of the screen as a reaction material;
b. placing the polypropylene powder in the middle layer of the screen in a closed reactor, followed by inert gas replacement;
c. dissolving a free radical initiator in an alkenyl-containing functional monomer to prepare a solution, adding the solution to the closed reactor filled with the polypropylene, and mixing with stirring;
d. adding deionized water, heating the system to the grafting reaction temperature of 30-110°C, to carry out the reaction for 0.5-10 hours; optionally swelling the reaction system before or after adding deionized water;
e. after the end of the reaction, filtering and optionally drying to obtain a powder;
f. washing the powder by a washing solvent at a temperature of 40-130°C for 0.5-10 h, filtering and drying to obtain the modified polypropylene grafted with an alkenyl-containing functional monomer.

Approach II, the preparation method comprises the following steps:

a. screening a powder by using a double-layer vibrating screen or a linear screen with 16-mesh and 48-mesh screens, and using the polypropylene powder in the middle layer of the screen as a reaction material;

b. placing the polypropylene powder in the middle layer of the screen in a closed reactor, followed by inert gas replacement;
c. mixing an organic solvent and a free radical initiator, and adding the mixture to the closed reactor;
d. removing the organic solvent, adding an alkenyl-containing functional monomer, and optionally swelling the reaction system;
e. adding deionized water, heating the system to the grafting reaction temperature of 30-110°C, to carry out the reaction for 0.5-10 hours;
f. after the end of the reaction, filtering and optionally drying to obtain a powder;
g. washing the powder by a washing solvent at a temperature of 40-130°C for 0.5-10 h, filtering and drying to obtain the modified polypropylene grafted with an alkenyl-containing functional monomer.

The inert gas of the invention may be various inert gases commonly used in the art, including but not limited to nitrogen, argon.

According to a preferred embodiment of the invention, the washing solvent is one or a mixture of two or more selected from the group consisting of n-hexane, cyclohexane, n-heptane, petroleum ether, ethyl acetate, propyl acetate, isopropyl acetate, butyl acetate, acetone, methyl ethyl ketone, tetrahydrofuran, 2-methyl tetrahydrofuran, benzene, toluene and xylene. Preferably, the washing solvent is a mixture of solvent A and solvent B, wherein the solvent A is at least one selected from the group consisting of n-hexane, cyclohexane, n-heptane, petroleum ether, ethyl acetate, propyl acetate, isopropyl acetate, butyl acetate, acetone, methyl ethyl ketone, tetrahydrofuran, and 2-methyl tetrahydrofuran, and the solvent B is at least one selected from the group consisting of toluene and xylene.

According to a preferred embodiment of the invention, the mass of the washing solvent is 2-20 times of the mass of the grafted polypropylene powder.

As mentioned above, the washing temperature can be 40-130°C, preferably 55-100°C, and the washing time can be 0.5-10 h, preferably 1-8 h.

The drying step after the reaction is preperably carried out. The drying step after the reaction and the drying step after the washing by the washing solvent are preferably carried out by vacuum drying, and the temperature can be 60-90°C.

According to the invention, the biaxially oriented polypropylene dielectric film comprises the modified polypropylene as the main or only resin component, and furthermore, the raw material for preparing the biaxially oriented polypropylene dielectric film may further comprise an antioxidant and optionally a processing aid, or other resin components in controlled amounts. Preferably, the content of the modified polypropylene grafted with an alkenyl-containing functional monomer is 50 wt% or more, preferably 60 wt% or more, more preferably 70 wt% or more, such as 75 wt%, 80 wt%, 85 wt%, 90 wt%, 95 wt%, based on the weight of the dielectric film.

The method for preparing polymer dielectric films from modified polypropylene can be performed with reference to the prior art. According to one embodiment of the invention, the biaxially oriented polypropylene dielectric film is prepared by a method comprising the steps of:

(1) mixing and pelletizing the modified polypropylene grafted with an alkenyl-containing functional monomer with an antioxidant and optionally a processing aid;
(2) melt extruding the pellets obtained in step (1) and casting, to obtain a modified polypropylene cast sheet;
(3) biaxially stretching the modified polypropylene cast sheet to obtain the biaxially oriented polypropylene dielectric film.

The invention further provides a modified polypropylene material for preparing dielectric films, the modified polypropylene material comprising modified polypropylene grafted with an alkenyl-containing functional monomer, wherein the modified polypropylene grafted with an alkenyl-containing functional monomer comprises structural units derived from polypropylene as a matrix phase and structural units derived from the alkenyl-containing functional monomer as a dispersion phase; the modified polypropylene grafted with an alkenyl-containing functional monomer has an ash content of less than 50 ppm, preferably less than 36 ppm, and more preferably less than 30 ppm; the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is more than or equal to 1.0; the D50 of the dispersion phase is less than 450 nm, preferably 50-400 nm.

The maximum working temperature of the modified polypropylene material is $\geq$ 100°C, preferably 110-160°C, and more preferably 120-145°C.

According to a preferred embodiment of the invention, the modified polypropylene material has at least one of the following characteristics:

- the breakdown field strength $E_g$ at 120°C is ≥ 500 MV/m, preferably 550-800 MV/m;
- the direct current volume resistivity $\rho_{vg}$ at 120°C and 200 MV/m field strength is ≥ $6.0\times10^{13}$ Ω·m, preferably $1.0\times10^{14}$ Ω·m -1.0 $\times10^{20}$ Ω·m, preferably $1.5\times10^{14}$ Ω·m-0.9 $\times10^{20}$ Ω·m, more preferably $2.0\times10^{14}$ Ω·m-1.0 $\times10^{17}$ Ω·m, for example, $1.0\times10^{15}$ Ω·m, 1.0 $\times$ $10^{16}$ Ω·m, and any value in this range;
- the dielectric constant at 120°C and 100 Hz is more than 2.25, preferably 2.26-2.65;
- the dielectric loss at 120°C and 100 Hz is less than 1.55E-3, preferably less than 1.5E-3, preferably less than or equal to 1.0E-3, more preferably 1.0E-6 to 1.3E-3, and further preferably 1.0E-6 to 9E-4;
- the energy storage density at 120°C and 300 MV/m is more than 0.720 J/$cm^3$, preferably 0.740-2.0 J/$cm^3$, more preferably 0.780-2.0 J/$cm^3$, and further preferably 0.80-2.0 J/$cm^3$;
- the energy storage efficiency at 120°C and 300 MV/m is more than 90.0%, and preferably 92.0-99.0%.

Other specific definitions of the modified polypropylene grafted with an alkenyl-containing functional monomer are as described above, and are not described herein again.

Further, the modified polypropylene material can also comprise an antioxidant and optionally a processing aid.

According to the invention, preferably, the content of the antioxidant is 0.1-0.8 part by weight, preferably 0.1-0.6 part by weight, and the content of the processing aid is 0.05-1 part by weight, preferably 0.05-0.5 part by weight, based on 100 parts by weight of the modified polypropylene.

According to some embodiments of the invention, the antioxidant is one or a mixture of two or more selected from the group consisting of hindered phenols, hindered amines, phosphites, thios, benzofuranones. The content of the antioxidant can be 0.1-0.8 part by weight, preferably 0.1-0.6 part by weight, based on 100 parts by weight of the modified polypropylene.

In the research, the inventor of the invention finds that proper antioxidant compounding combination and proportion can obviously improve the thermo-oxidative aging resistance of the modified polypropylene material, so that the prepared film product has excellent thermal stability. Specifically, the antioxidant is obtained by compounding an antioxidant component A and an antioxidant component B, wherein the antioxidant component A is at least one selected from the group consisting of hindered phenols, hindered amines, phosphites and thios, and the antioxidant component B is at least one benzofuranone. Preferably, the weight ratio of the antioxidant component A to the antioxidant component B is 1: 0.01-0.03.

More specifically, the antioxidant component A is at least one selected from the group consisting of pentaerythrityl tetrakis[beta-(3,5-di-t-butyl-4-hydroxyphenyl) propionate] (antioxidant 1010), tris[2,4-di-t-butylphenyl] phosphite (antioxidant 168), n-octadecyl beta-(3,5-di-t-butyl-4-hydroxyphenyl) propionate (antioxidant 1076), 2,2'-thiobis[3-(3,5-di-t-butyl-4-hydroxyphenyl) propionate] (antioxidant 1035), 2,2'-methylene bis (4-methyl-6-t-butylphenol) (antioxidant 2246), 1,1,3-tris (2-methyl-4-hydroxy-5-t-butylphenyl) butane (antioxidant CA), and bis (2, 4-di-tert-butylphenol) pentaerythritol diphosphite (antioxidant 626). The antioxidant component B is at least one selected from the group consisting of 3-butyl-1-(3-hydrogen)-isobenzofuranone (antioxidant 501), 5-methyl-7-tert-butyl-3-(3,4-dimethyl)-3-hydrogen-benzofuran-2-one, 5-methyl-7-tert-butyl-3-(2,5-dimethyl)-3-hydrogen-benzofuran-2-one and 5-methyl-7-tert-butyl-3- (2-hydroxy-5-methyl)-3-hydrogen-benzofuran-2-one.

According to a specific embodiment of the invention, the antioxidant is selected from a combination of antioxidant 1010 and/or antioxidant 168 and/or antioxidant 501. According to a preferred embodiment of the invention, the content of the antioxidant in the modified polypropylene material is preferably 0.2-0.4 parts by weight, based on 100 parts by weight of the modified polypropylene material.

According to the invention, the processing aid includes, but is not limited to, lubricants, acid acceptors, slip agents, antistatic agents, antiblock agents and the like. The amount of each aid can be selected conventionally in the art, and is known to those skilled in the art, and will not be described herein. The processing aid used does not have adverse effects on the tensile film-forming property and mechanical property of the modified polypropylene material. The content of the processing aid may be 0.05-1 part by weight, preferably 0.05-0.5 part by weight, based on 100 parts by weight of the modified polypropylene.

According to some embodiments of the invention, the processing aid is a lubricant. The lubricant can be one or more selected from polyethylene glycol lubricants, fluoropolymer lubricants, organosilicon lubricants, fatty alcohol lubricants, fatty acid lubricants, fatty acid ester lubricants, stearic acid amide lubricants, fatty acid metal soap lubricants, alkane and oxidized alkane lubricants and micro-nano particle lubricants.

Specifically, the PEG lubricant may be, for example, PEG molecules with a molecular weight of 500-50000, which may be subjected to end capping, grafting and crosslinking treatment and may also be subjected to other chemical modification or physical modification. The fluoropolymer lubricant may be, for example, at least one selected from polytetrafluoroethylene, polyvinylidene fluoride, polyhexafluoropropylene and the like, or may be other unimodal or multimodal fluoropolymer or a crystalline or semicrystalline fluoropolymer. The organosilicon lubricant may be a variety of existing compounds containing carbon and silicon atoms as the main chain of molecules, and oligomers or oligopolymers of organic groups such as methyl, phenyl, alkoxy, and vinyl as the side chains. The fatty alcohol lubricant may be, for

example, at least one selected from soft fatty alcohols, hard fatty alcohols, tallow fatty alcohols and the like. The fatty acid lubricant may be, for example, at least one selected from stearic acid and/or 12-hydroxystearic acid. The fatty acid ester lubricant may be, for example, at least one selected from butyl stearate, monoglyceryl stearate, cetyl palmitate, stearyl stearate and the like. The stearic acid amide lubricant may be, for example, at least one selected from stearamide, oleamide, erucamide, n,n-ethylene bis-stearamide (EBS) and the like. The fatty acid metal soap lubricant may be, for example, at least one selected from lead stearate, calcium stearate, magnesium stearate, synthetic calcium acetate and the like. The alkane and oxidized alkane lubricant may be, for example, at least one selected from liquid paraffin, solid paraffin, polyethylene wax, polypropylene wax, ethylene oxide wax and the like. The micro-nano particle lubricant may be, for example, powder rubber and/or silica gel particles.

According to a specific embodiment of the invention, the processing aid is a fluoropolymer.

The above various processing aids are commercially available.

The modified polypropylene material of the invention is prepared by mixing various components.

The method for preparing the pellets of the modified polypropylene material into a polymer dielectric film can be performed according to the prior art, for example, the pellets can be processed by hot pressing or extrusion casting, or the pellets can be processed by biaxial stretching to form the dielectric film.

The pellets may be prepared according to conventional granulation methods in the art, for example, by pelleting via a twin screw extruder.

According to a specific embodiment of the invention, the biaxially oriented polypropylene dielectric film is prepared by a method comprising the steps of:

(1) mixing and pelletizing the modified polypropylene material;
(2) melt extruding the pellets obtained in step (1) and casting, to obtain a modified polypropylene cast sheet;
(3) biaxially stretching the modified polypropylene cast sheet to obtain the biaxially oriented polypropylene dielectric film.

The process of mixing and pelletizing the modified polypropylene material with an antioxidant, a processing aid in the step (1) may generally comprise the steps: uniformly mixing the modified polypropylene material in a high-speed stirrer, adding the uniformly mixed material into a twin-screw extruder or a single-screw extruder, melting, mixing, uniformly extruding and pelletizing, and drying to obtain pellets. Wherein the processing temperature of the twin-screw extruder can be controlled to be 190-230°C.

According to the invention, in the step (2) the temperature of melt extruding is 190-230°C, and the temperature of a casting quenching roller for casting is 15-50°C. The modified polypropylene cast sheet can be of a single-layer structure or a multi-layer structure.

According to a specific embodiment of the invention, the method for preparing the dielectric film comprises the steps of: putting the modified polypropylene material pellets into a hot air oven for drying, adding the dried pellets into an extrusion casting machine for melt extrusion and casting to obtain a cast sheet, wherein the temperature of an extruder for melt extrusion is 230°C, the temperature of a screen changing area is controlled at 230°C, the temperature of a machine head is controlled at 230°C, the temperature of a casting roller is controlled at 25°C, and a thick cast sheet with a thickness of 230±20 μm is prepared. The above-mentioned polypropylene thick cast sheet is put into a stretching fixture of a film biaxial stretching equipment, and subjected to a biaxial synchronous stretching process.

In order to improve the properties of the dielectric film, the dielectric film preferably further contains a film-forming aid. The film-forming aid may be at least one selected from the group consisting of halogen-resistant agents, light stabilizers, heat stabilizers, colorants, fillers, slip agents, anti-blocking agents, and antistatic agents. The particular type of the film-forming aid is a matter of routine choice in the art and will not be described in detail herein.

The biaxially oriented polypropylene dielectric film, the modified polypropylene material according to the invention can be used as an energy storage dielectric medium, and are particularly suitable for being used as a high-temperature energy storage dielectric medium due to their high working temperature. The dielectric medium is preferably a film dielectric medium, which may be a monolayer or a multilayer, including but not limited to a capacitor film, an electrical film, a rough film, a supercapacitor film, an electrostatic film, or a battery separator film. The polypropylene dielectric energy storage material of the present invention is particularly suitable for preparing a capacitor film. The capacitor film, which is a functional film material with electric polarization as its basic electrical characteristic, is used as a dielectric material in thin-film capacitors because of its excellent insulating property and dielectric property. The electrical film, which is a film having a thickness of 350 μm or less and excellent electrical performance, is usually made using a high-molecular polymer as the raw material, and may contain some auxiliary materials, which meets the requirements of corrosion resistance, radiation resistance and the like of electrical products, and is generally used for insulation of electronic parts, automobile wiring, wire winding, insulation protection and the like.

Specifically, the invention provides a polypropylene capacitor film, which is one or more layers, wherein at least one part of at least one layer is the biaxially oriented polypropylene dielectric film as described above, or at least one layer is

made of raw materials containing the modified polypropylene material as described above, preferably by biaxial stretching, and preferably at least one layer is made of the modified polypropylene material as described above by biaxial stretching.

In addition, the invention provides a polypropylene electrical film, which is one or more layers, wherein at least one part of at least one layer is the biaxially oriented polypropylene dielectric film as described above, or at least one layer is made of raw materials containing the modified polypropylene material as described above, preferably by biaxial stretching, and preferably at least one layer is made of the modified polypropylene material as described above by biaxial stretching.

The preparation method of the polypropylene capacitor film/electrical film comprises the steps of: adding the modified polypropylene material pellets obtained in the step (1) into a casting equipment for extrusion casting to obtain a cast sheet, and then stretching the obtained cast sheet in a film biaxial stretching equipment. During the extrusion casting, a cast sheet die may be selected according to the structure of the film to be obtained, for example, when a film having a monolayer structure is to be obtained, a monolayer die may be used, and when a film having a multilayer structure (for example, a film having a three-layer structure of an upper surface layer, a core layer and a lower surface layer) is to be obtained, a multilayer composite die may be used, and at least one layer (for example, the core layer) of the multilayer composite die is communicated with an extruder hopper containing the above-mentioned modified polypropylene material, so that at least one layer (for example, the core layer) of the obtained film is a modified polypropylene layer formed of the above-mentioned modified polypropylene material. In the extrusion process, the extrusion temperature can be 100-200°C, and the temperature of the casting quenching roller can be 15-50°C.

In the invention, the biaxial stretching includes synchronous stretching (i.e., simultaneous stretching the film in Machine Direction (MD) and Transverse Direction (TD)) or stepwise stretching (i.e., stretching the film first in MD and then in TD).

The synchronous stretching comprises the steps of: preheating a cast sheet of a modified polypropylene material at a preheating temperature that may be 120-170°C, and then simultaneously performing MD and TD stretching, wherein the synchronous stretching conditions include that the stretching temperature is 150-175°C, the MD stretching ratio is 3 times or more, the TD stretching ratio is 3 times or more, the MD stretching rate is 50-300%/s, and the TD stretching rate is 50-300%/s.

The stepwise stretching comprises the steps of: preheating a cast sheet of a modified polypropylene material, thereafter performing MD stretching, and then performing TD stretching, wherein the stepwise stretching conditions include that the MD stretching temperature is 150-170°C, the TD stretching temperature is 155-175°C, the MD stretching ratio is 3 times or more, the TD stretching ratio is 5 times or more, the MD stretching rate is 50-300%/s, and the TD stretching rate is 50-300%/s.

According to the invention, the method may or may not comprise performing an annealing setting treatment of the stretched film, preferably, the method of the invention comprises performing an annealing setting treatment of the stretched film, wherein, in the case of performing the annealing setting treatment, the temperature of the annealing setting treatment is preferably 160-180°C. The time of the annealing setting treatment is preferably 5-60 s. The annealing setting treatment of the stretched film can improve the dimensional stability of the film.

According to the invention, the method may further comprise subjecting the obtained polypropylene film to surface corona treatment, edge cutting and winding treatment, which are conventional operations in the art, and the invention has no special limitations thereto.

The invention will be further described with reference to the following examples, but the scope of the invention is not limited to these examples.

In the following examples and comparative examples:

The film casting apparatus was purchased from Labtech, Sweden, under the model LCR 400.

The film biaxial stretching equipment was purchased from Brückner, Germany, under the model Karo IV

The properties of the modified polypropylene material and the film were determined according to the following methods.

### 1. Determination of the ash content of the polypropylene/modified polypropylene material:

The determination was carried out according to the method specified in GB/T 9345-2008.

### 2. Determination of the isotacticity of the polypropylene:

The determination was carried out according to the method specified in GB/T 2412-2008.

### 3. Determination of the melt flow rate MFR:

The MFR of the polypropylene/modified polypropylene material was determined at 230°C under a load of 2.16 kg using 7026 type melt index apparatus from CEAST, according to the method specified in GB/T3682-2018.

**4. Determination of the melting temperature $T_m$:**

The melting and crystallization processes of the polypropylene/modified polypropylene material were analyzed by a differential scanning calorimeter. The specific operations were as follows: under the protection of nitrogen, 5 m g of a sample was placed in a crucible, the temperature was raised from 20°C to 200°C at a heating rate of 10°C/min, held for 5 min to eliminate thermal history, then the temperature was lowered to 20°C at a cooling rate of 10°C/min, held for 1 min, finally the temperature was raised to 200°C at a heating rate of 10°C/min, the scanning data of the third temperature raising was recorded, and the melting temperature $T_m$ was calculated according to GB/T19466.3-2004.

**5. Determination of the parameter η:**

1-2 g of a grafted product was refluxed with a proper amount of xylene until the particles were completely dissolved. The xylene solution, while hot, was poured into 6 times of an organic solvent (ethyl acetate or acetone) for precipitation. The mixed liquid was allowed to stand for 1 hour until insoluble matter was completely precipitated. The mixed liquid was filtered with a vacuum funnel, and the filtered insoluble matter, i.e., pure grafted product, was dried and weighed. The ratio of the grafted part to the self-polymerized part of the structural units derived from the functional monomer was as follows:

$$\eta = \frac{w_2 - w_0}{w_1 - w_2}$$

wherein, $w_0$ is the mass of the ungrafted polypropylene, $w_1$ is the mass of the grafted product, and $w_2$ is the mass of the insoluble matter.

**6. Determination of the flexural modulus:**

The determination was carried out according to the method specified in GB/T9341-2008.

**7. Determination of the direct current volume resistivity:**

The determination was carried out according to the method specified in GB/T13542.2-2009, wherein the determination method was a contact electrode method, and the electrode material was a conductive rubber.

**8. Determination of the breakdown field strength:**

The determination was carried out according to the method specified in GB/T13542.2-2009, wherein the determination method was a 50-point electrode method.

**9. Determination of the energy storage density and the energy storage efficiency:**

The determination was carried out with a reference to the method specified in the literature: Yuan, C., Zhou, Y, Zhu, Y et al. Polymer/molecular semiconductor all-organic composites for high-temperature dielectric energy storage. Nat. Commun. 11, 3919 (2020).

**10. Determination of the dielectric constant and the dielectric loss factor:**

The determination was carried out with a reference to the method specified in the literature: Yuan, C., Zhou, Y, Zhu, Y et al. Polymer/molecular semiconductor all-organic composites for high-temperature dielectric energy storage. Nat. Commun. 11, 3919 (2020).

**11. Determination of the thickness of the film:**

The determination was carried out according to the method specified in GB/T13542.3-2006, wherein the measurement method was a micrometer method.

**12. Characterization of the dispersion phase and calculation of the D50**

The sample strips obtained by hot pressing and extrusion of the modified polypropylene material were soaked in liquid nitrogen for 15 min and then subjected to brittle fracture. The fracture surface was subjected to metal spraying treatment, and then characterized by a thermal field emission scanning electron microscope (NanoSEM 450 from FEI, USA), to obtain a micro-morphology picture. Through Nano Measurer 1.2 analysis software, 200 dispersion phases were taken for each sample and the diameter was measured, and D50 was calculated using data processing software. D50 represents the median particle size, that is, the particle size of a sample at which the cumulative particle size distribution percentage reaches 50%.

**13. Determination of the tensile strength and the elongation at break of the film:**

The determination was carried out according to the method specified in GB / T 13542.2-2009.

**14. Determination of the TSDC:**

The determination was carried out with a reference to the method specified in the literature: Tian Fuqiang, Bu Wenbin, Shi Linshuang, et al. Theory of modified thermally stimulated current and direct determination of trap level distribution[J]. Journal of Electrostatics, 2011, 69 (1) : 7-10.

The material was pressed into a film with an average thickness of 50 μm, onto the surface of which a circular gold electrode with a diameter of 20 mm was sputtered. During the determination, the sample was first polarized for 30 min at a certain polarization temperature by using a direct current field of 20 kV/mm, then, while maintaining the electric field, the temperature was rapidly reduced to -100°C. The electric field was then removed for 15 min to eliminate unfrozen trapped charges. Thereafter, the temperature was linearly raised from -100°C to 150°C at a heating rate of 3°C/min, and the depolarization current was determined simultaneously.

Examples

Raw materials used in the examples are listed in Table A and Table B below.

Table A

| Name | Description |
|---|---|
| PP1 | Self made with a reference to the method described in CN109694428A |
| PP2 | Self made with a reference to the method described in CN109694428A |
| PP3 | Self made with a reference to the method described in CN109694429A |
| PP4 | Self made with a reference to the method described in CN109694429A |
| Dibenzoyl peroxide | J&K Chemicals |
| Lauroyl peroxide | J&K Chemicals |
| Tert-butyl peroxy (2-ethylhexanoate) | Adamas-beta |
| Styrene | J&K Chemicals |
| Methyl methacrylate | J&K Chemicals |
| Vinyltriethoxysilane | J&K Chemicals |
| Glycidyl methacrylate | J&K Chemicals |
| Acrylic acid | Sinopharm Chemicals |
| Methyl acrylate | Sinopharm Chemicals |
| 4-Vinylpyridine | J&K Chemicals |
| Maleic anhydride | Sinopharm Chemicals |
| Polystyrene GPPS-123 | Shanghai Secco Petrochemical Co., Ltd. |
| Antioxidant 1010 | BASF |
| Antioxidant 168 | BASF |

(continued)

| Name | Description |
|---|---|
| Antioxidant 1035 | BASF |
| Antioxidant 501 | CHITEC |
| Fluoropolymer | 3M FX5920 |

Table B Properties of powders used in the examples

| | Ash content ppm | Flexural modulus MPa | Isotacticity % | Melt index g/10min | Melt temperature °C |
|---|---|---|---|---|---|
| PP1 | 22 | 1600 | 97.8 | 3.0 | 163.3 |
| PP2 | 29 | 1600 | 97.6 | 3.4 | 162.8 |
| PP3 | 38 | 1590 | 96.5 | 3.3 | 161.8 |
| PP4 | 56 | 1630 | 98.7 | 2.9 | 163.1 |

The polypropylene powder used in all the examples was screened by a vibrating screen equipped with 16-mesh and 48-mesh sieves before the grafting reaction.

Example 1

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 7.2 g of tert-butyl peroxy (2-ethylhexanoate) and 400 g of styrene were formulated into a uniform solution, then added into the reaction kettle, and mixed with stirring with the powder for 30 minutes. Then, 17.8 kg of deionized water that has been deaerated was added, and the reaction mixture was heated to 50°C and swelled for 2 h. The swollen powder was heated to 95°C, and reacted for 4 h. After the end of the reaction, the reaction product was cooled, filtered to remove liquid components, and dried at 70°C in vacuum for 10 h to obtain polypropylene-g-styrene powder. Fig. 1 is a photograph showing the microstructure of the product of Example 1 under an electron microscope of 20000 times, in which the spherical part with higher brightness is a dispersion phase formed by styrene structural units. It can be seen that the particle size of the dispersion phase is small and the morphology is regular. The graft-modified polypropylene obtained was tested for the graft/self-polymerized ratio $\eta$, D50, ash, MFR, Tm and flexural modulus. The results are shown in Table 1.

The obtained polypropylene-g-styrene powder and antioxidant 1010/168 (in a weight ratio of 1:1) were weighed, and added into a high-speed stirrer for uniform mixing. The materials were pelletized by a WP25 type twin-screw extruder from Coperion Co. at the partition temperature of 190-200-210-220-230-230-220°C and the screw speed of 300 rpm, to obtain polypropylene-g-styrene pellets. The amount of the antioxidant was 0.3 part by weight based on 100 parts by weight of the polypropylene-g-styrene powder.

The obtained pellets were dried in a hot air oven, and then the dried pellets were added into a LCR400 type extrusion casting machine from Labtech Co., Sweden, for melt extrusion and casting to obtain a cast sheet, wherein the temperature of an extruder for melt extrusion was 230°C, the temperature of a screen changing area was controlled at 230°C, the temperature of a machine head was controlled at 230°C, the temperature of a casting roller was controlled at 25°C, and a thick cast sheet with a thickness of 230$\pm$20 $\mu$m was prepared.

The obtained polypropylene thick cast sheet was put into a stretching fixture of a film biaxial stretching equipment, and subjected to a biaxial synchronous stretching process. The process conditions of various steps included: the preheating temperature was 160°C, the stretching temperature was 160°C, the stretching ratio was 5.5$\times$5.5 times, the film stretching rate was 100%/s; the film setting temperature was 160°C. The obtained polypropylene film was tested for various electrical property parameters. The results are shown in Table 2.

Example 2

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 13.5 g of tert-butyl peroxy (2-ethylhexanoate) and 1001 g of styrene were formulated into a uniform solution, then added into the reaction kettle, and mixed with stirring with the powder. The reaction mixture was heated to 40°C and swelled for 3 h. Then, 36.0 kg of deionized water that has been deaerated and preheated to 40°C was added through a charging tank, the reaction kettle was heated to 90°C, and the reaction was carried out for 6 h. After the end of the reaction,

the reaction product was cooled, filtered to remove liquid components, and dried at 70°C in vacuum for 10 h to obtain polypropylene-g-styrene powder. Fig. 2 is a photograph showing the microstructure of the product of Example 2 under an electron microscope of 20000 times, in which the spherical part with higher brightness is a dispersion phase formed by styrene structural units.

The obtained powder was pelletized and a film product was prepared in the same manner as in Example 1, and the obtained graft-modified polypropylene and the obtained polypropylene film were tested for various structural and performance parameters. The results are shown in Tables 1 and 2.

Example 3

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 3.1 g of dibenzoyl peroxide and 112 g of styrene and 13.9 g of maleic anhydride were formulated into a uniform solution, then added into the reaction kettle, and mixed with stirring with the powder. The obtained mixture was swelled at room temperature for 8 h, and heated to 92°C. Then, 16.4 kg of deionized water that has been deaerated and preheated to 92°C was added through a charging tank, and the reaction was carried out for 4 h. After the end of the reaction, the reaction product was cooled, filtered to remove liquid components, and dried at 70°C in vacuum for 10 h to obtain polypropylene-g-maleic anhydride/styrene powder. Fig. 3 is a photograph showing the microstructure of the powder of Example 3 under an electron microscope of 20000 times, in which the spherical part with higher brightness is a dispersion phase formed by maleic anhydride/styrene structural units.

The obtained powder was pelletized and a film product was prepared in the same manner as in Example 1, and the obtained graft-modified polypropylene and the obtained polypropylene film were tested for various structural and performance parameters. The results are shown in Tables 1 and 2.

Example 4

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 2.5 g of dibenzoyl peroxide and 250.5 g of methyl methacrylate were formulated into a uniform solution, then added into the reaction kettle, and mixed with stirring with the powder for 30 min, to which was added 26.3 kg of deionized water that has been deaerated. The reaction kettle was heated to 91°C, and the reaction was carried out for 3 h. After the end of the reaction, the reaction product was cooled, filtered to remove liquid components, and dried at 70°C in vacuum for 10 h to obtain polypropylene-g-methyl methacrylate powder.

The obtained powder was pelletized and a film product was prepared in the same manner as in Example 1, and the obtained graft-modified polypropylene and the obtained polypropylene film were tested for various structural and performance parameters. The results are shown in Tables 1 and 2.

Example 5

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 6.2 g of dibenzoyl peroxide and 198.0 g of styrene and 52.0 g of maleic anhydride were formulated into a uniform solution, then added into the reaction kettle, and mixed with stirring with the powder. The obtained mixture was swelled at room temperature for 6 h, and heated to 90°C. Then, 22.6 kg of deionized water that has been deaerated and preheated to 90°C was added through a charging tank, and the reaction was carried out for 4 h. After the end of the reaction, the reaction product was cooled, filtered to remove liquid components, and dried at 70°C in vacuum for 10 h to obtain polypropylene-g-maleic anhydride/styrene powder.

The obtained powder was pelletized and a film product was prepared in the same manner as in Example 1, and the obtained graft-modified polypropylene and the obtained polypropylene film were tested for various structural and performance parameters. The results are shown in Tables 1 and 2.

Example 6

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 31 g of lauroyl peroxide and 603 g of vinyltriethoxysilane were formulated into a uniform solution, then added into the reaction kettle, and mixed with stirring with the powder for 20 min, to which was added 19.6 kg of deionized water that has been deaerated. The reaction kettle was heated to 91°C, and the reaction was carried out for 7 h. After the end of

the reaction, the reaction product was cooled, filtered to remove liquid components, and dried at 70°C in vacuum for 10 h to obtain polypropylene-g-vinyltriethoxysilane powder.

The obtained powder was pelletized and a film product was prepared in the same manner as in Example 1, and the obtained graft-modified polypropylene and the obtained polypropylene film were tested for various structural and performance parameters. The results are shown in Tables 1 and 2.

Example 7

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 6.2 g of dibenzoyl peroxide and 115.0 g of methyl acrylate and 38.0 g of acrylic acid were formulated into a uniform solution, then added into the reaction kettle, and mixed with stirring with the powder for 40 min. The obtained mixture was heated to 95°C. Then, 36.1 kg of deionized water that has been deaerated and preheated to 90°C was added through a charging tank, and the reaction was carried out for 4 h. After the end of the reaction, the reaction product was cooled, filtered to remove liquid components, and dried at 70°C in vacuum for 10 h to obtain polypropylene-g-methyl acrylate/acrylic acid powder.

The obtained powder was pelletized and a film product was prepared in the same manner as in Example 1, and the obtained graft-modified polypropylene and the obtained polypropylene film were tested for various structural and performance parameters. The results are shown in Tables 1 and 2.

Example 8

PP1 powder in Example 1 was replaced with PP3 powder sieved from a middle layer of a sieving machine, while other preparation conditions and method were the same as those of Example 1, and the obtained graft-modified polypropylene and the obtained polypropylene film were tested for various structural and performance parameters. The results are shown in Tables 1 and 2.

Example 9

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 8.8 g of dibenzoyl peroxide and 355 g of 4-vinylpyridine were formulated into a uniform solution, then added into the reaction kettle, and mixed with stirring with the powder for 30 min, to which was added 27.8 kg of deionized water that has been deaerated, and the reaction mixture was heated to 50°C and swelled for 2 h. The reaction kettle was heated to 92°C, and the reaction was carried out for 6 h. After the end of the reaction, the reaction product was cooled, filtered to remove liquid components, and dried at 70°C in vacuum for 10 h to obtain polypropylene-g-4-vinylpyridine powder.

The obtained powder was pelletized and a film product was prepared in the same manner as in Example 1, and the obtained graft-modified polypropylene and the obtained polypropylene film were tested for various structural and performance parameters. The results are shown in Tables 1 and 2.

Example 10

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 1.35 g of dibenzoyl peroxide and 76 g of glycidyl methacrylate were formulated into a uniform solution, then added into the reaction kettle, and mixed with stirring with the powder for 30 min, to which was added 16.7 kg of deionized water that has been deaerated. The reaction kettle was heated to 93°C, and the reaction was carried out for 2.5 h. After the end of the reaction, the reaction product was cooled, filtered to remove liquid components, and dried at 70°C in vacuum for 10 h to obtain polypropylene-g-glycidyl methacrylate powder. Fig. 4 is a photograph showing the microstructure of the powder of Example 10 under an electron microscope of 20000 times, in which the spherical part with higher brightness is a dispersion phase.

The obtained powder was pelletized and a film product was prepared in the same manner as in Example 1, and the obtained graft-modified polypropylene and the obtained polypropylene film were tested for various structural and performance parameters. The results are shown in Tables 1 and 2.

Example 11

PP1 powder sieved from a middle layer of a sieving machine in Example 1 was replaced with PP1 powder sieved

from an upper layer of the sieving machine, while other preparation conditions and method were the same as those of Example 1, and the obtained graft-modified polypropylene and the obtained polypropylene film were tested for various structural and performance parameters. The results are shown in Tables 1 and 2.

Example 12

PP1 powder sieved from a middle layer of a sieving machine in Example 1 was replaced with PP1 powder sieved from a bottom layer of the sieving machine, while other preparation conditions and method were the same as those of Example 1, and the obtained graft-modified polypropylene and the obtained polypropylene film were tested for various structural and performance parameters. The results are shown in Tables 1 and 2.

Example 13

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement, 7.2 g of tert-butyl peroxy (2-ethylhexanoate) and 400 g of styrene were formulated into a uniform solution, then added into the reaction kettle, and mixed with stirring with the powder for 30 min, to which was added 17.8 kg of deionized water that has been deaerated, and the reaction mixture was heated to 50°C and swelled for 2 h. The swelled powder was heated to 95°C, and reacted for 4 h. After the end of the reaction, the reaction product was cooled, filtered to remove liquid components, and dried at 70°C in vacuum for 10 h to obtain polypropylene-g-styrene powder C13. The obtained graft-modified polypropylene was tested in aspects of graft/self-polymerized ratio $\eta$, D50, ash content, MFR, Tm and flexural modulus. The results are shown in Table 1.

1.5 kg of the above polypropylene-g-styrene powder C13 was weighed, 3 kg of xylene and 20 kg of THF were added, then the reaction system was sealed, heated to 70°C and stirred for washing for 5 h. After the end of stirring, the liquid phase was removed by filtration, and the product was dried at 70°C in vacuum for 10 h to obtain polypropylene-g-styrene powder B13. The obtained graft-modified polypropylene was tested in aspects of graft/self-polymerized ratio $\eta$, D50, ash content, MFR, Tm and flexural modulus. The results are shown in Table 1.

The above polypropylene-g-styrene powder (C13 or B13) and antioxidant 1010/168 (in a weight ratio of 1:1) were weighed, and added into a high-speed stirrer for uniform mixing. The materials were pelletized by a WP25 type twin-screw extruder from Coperion Co. at the partition temperature of 190-200-210-220-230-230-220°C and the screw speed of 300 rpm, to obtain polypropylene-g-styrene pellets. The amount of the antioxidant was 0.3 part by weight based on 100 parts by weight of the polypropylene-g-styrene powder.

The obtained pellets were dried in a hot air oven, and then the dried pellets were added into a LCR400 type extrusion casting machine from Labtech Co., Sweden, for melt extrusion and casting to obtain a cast sheet, wherein the temperature of an extruder for melt extrusion was 230°C, the temperature of a screen changing area was controlled at 230°C, the temperature of a machine head was controlled at 230°C, the temperature of a casting roller was controlled at 25°C, and a thick cast sheet with a thickness of $230\pm20$ $\mu$m was prepared.

The obtained polypropylene thick cast sheet was put into a stretching fixture of a film biaxial stretching equipment, and subjected to a biaxial synchronous stretching process. The process conditions of various steps included: the preheating temperature was 160°C, the stretching temperature was 160°C, the stretching ratio was $5.5\times5.5$ times, the film stretching rate was 100%/s; the film setting temperature was 160°C. The obtained polypropylene films C13 and B13 were tested for various electrical property parameters. The results are shown in Table 2.

Example 14

3.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 8.2 g of tert-butyl peroxy (2-ethylhexanoate) and 63 g of styrene, 470 g of methyl methacrylate were formulated into a uniform solution, then added into the reaction kettle, and mixed with stirring with the powder. The reaction mixture was swelled at 60°C for 2 h. Then, 18.1 kg of deionized water that has been deaerated and preheated to 60°C was added through a charging tank. The reaction kettle was heated to 90°C, and the reaction was carried out for 6 h. After the end of the reaction, the reaction product was cooled, filtered to remove liquid components. 23 kg of acetone and 2 kg of n-heptane were added, the obtained mixute was heated to 55°C, and stirred for 3 h. After the end of stirring, the liquid phase was removed by filtration, and the product was dried at 70°C in vacuum for 10 h to obtain polypropylene-g-methyl methacrylate/styrene powder B14.

The obtained powder was pelletized and a film product was prepared in the same manner as in Example 13, and the obtained graft-modified polypropylene and the obtained polypropylene film B14 were tested for various structure and performance parameters. The results are shown in Tables 1 and 2.

Example 15

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 2.5 g of dibenzoyl peroxide and 250.5 g of methyl methacrylate were formulated into a uniform solution, then added into the reaction kettle, and mixed with stirring with the powder for 30 min, to which was added 26.3 kg of deionized water that has been deaerated. The reaction kettle was heated to 91°C, and the reaction was carried out for 3 h. After the end of the reaction, the reaction product was cooled, filtered to remove liquid components, and dried at 70°C in vacuum for 10 h to obtain polypropylene-g-methyl methacrylate powder C15.

3 kg of the above polypropylene-g-methyl methacrylate powder C15 was weighed, 10 kg of xylene and 20 kg of ethyl acetate were added, then the reaction system was sealed, heated to 70°C and stirred for washing for 7 h. After the end of stirring, the liquid phase was removed by filtration, and the product was dried at 70°C in vacuum for 10 h to obtain 2.965 kg polypropylene-g-methyl methacrylate powder B15. The results of TSDC determination are shown in Fig. 6.

The obtained powder was pelletized and a film product was prepared in the same manner as in Example 13, and the obtained graft-modified polypropylene and the obtained polypropylene films C15 and B15 were tested for various structure and performance parameters. The results are shown in Tables 1 and 2.

Example 16

1.5 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 1.9 g of dibenzoyl peroxide and 59.7 g of styrene and 15.6 g of maleic anhydride were formulated into a uniform solution, then added into the reaction kettle, and mixed with stirring with the powder. The obtained mixture was swelled at room temperature for 6 h, and heated to 90°C. Then, 7.0 kg of deionized water that has been deaerated and preheated to 90°C was added through a charging tank, and the reaction was carried out for 4 h. After the end of the reaction, the reaction product was cooled, filtered to remove liquid components. 25 kg of acetone was added, and the obtained solution was heated to 55°C and stirred for 5 h. After the end of stirring, the liquid phase was removed by filtration, and the product was dried at 70°C in vacuum for 10 h to obtain polypropylene-g-maleic anhydride/styrene powder B16.

The obtained powder was pelletized and a film product was prepared in the same manner as in Example 13, and the obtained graft-modified polypropylene and the obtained polypropylene film B16 were tested for various structure and performance parameters. The results are shown in Tables 1 and 2.

Comparative Example 1

5.0 kg of PP1 powder sieved from a middle layer of a sieving machine was pelletized and a film product was prepared, the preparation conditions and method being the same as those of Example 1. The polypropylene and the obtained polypropylene film were tested for various structure and performance parameters. The results are shown in Tables 1 and 2. Fig. 5 is a photograph showing the microstructure of the PP1 powder under an electron microscope of 20000 times, in which no dispersion phase is observed.

Comparative Example 2

PP1 powder in Example 1 was replaced with PP4 powder sieved from a middle layer of a sieving machine, and 10.8 kg of deionized water was added, while other preparation conditions and method were the same as those of Example 1. The obtained graft-modified polypropylene and the obtained polypropylene film were tested for various structure and electrical property parameters. The results are shown in Tables 1 and 2.

Comparative Example 3

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 18.6 g of dibenzoyl peroxide and 735 g of 4-vinylpyridine were formulated into a uniform solution, then added into the reaction kettle, and mixed with stirring with the powder for 30 min, to which was added 36.7 kg of deionized water that has been deaerated, and the reaction mixture was heated to 50°C and swelled for 2 h. The reaction kettle was heated to 92°C, and the reaction was carried out for 6 h. After the end of the reaction, the reaction product was cooled, filtered to remove liquid components, and dried at 70°C in vacuum for 10 h to obtain polypropylene-g-4-vinylpyridine powder.

The obtained powder was pelletized and a film product was prepared in the same manner as in Example 1, and the obtained graft-modified polypropylene and the obtained polypropylene film were tested for various structure and

electrical property parameters. The results are shown in Tables 1 and 2.

Comparative Example 4

5.0 kg of PP1 powder sieved from a middle layer of a sieving machine and 400 g of polystyrene GPPS-123 were pelletized and a film product was prepared, while other preparation conditions and method were the same as those of Example 1. The obtained polypropylene film was tested for various electrical property parameters. The results are shown in Table 2.

Comparative Example 5

5.0 kg of PP1 powder sieved from a middle layer of a sieving machine and 1000 g polystyrene GPPS-123 were pelletized and a film product was prepared, while other preparation conditions and method were the same as those of Example 2. When biaxially oriented, the film was broken.

Comparative Example 6

Tongfeng MPP03 high temperature film was tested for various performance parameters. The results are shown in Table 2.

Comparative Example 7

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 2.0 g of dibenzoyl peroxide and 188.2 g of methyl methacrylate were formulated into a uniform solution, then added into the reaction kettle, and mixed with stirring with the powder for 30 min, to which was added 25.9 kg of deionized water that has been deaerated. The reaction kettle was heated to 90°C, and the reaction was carried out for 3 h. After the end of the reaction, the reaction product was cooled, filtered to remove liquid components, and dried at 70°C in vacuum for 10 h to obtain 5.168 kg of polypropylene-g-methyl methacrylate powder D7. The results of TSDC determination are shown in Fig. 6.

The obtained powder was pelletized and a film product was prepared in the same manner as in Example 13, and the obtained graft-modified polypropylene and the obtained polypropylene film D7 were tested for various structure and performance parameters. The results are shown in Tables 1 and 2.

Table 1

| | Graft/self-polymerized ratio $\eta$ | D50 nm | Ash content ppm | MFR g/10min | Tm,°C | Flexural modulus MPa |
|---|---|---|---|---|---|---|
| C1 | 2.8 | 295 | 19 | 3.2 | 163.7 | 1610 |
| C2 | 1.3 | 386 | 22 | 2.0 | 162.3 | 1620 |
| C3 | 1.1 | 89 | 26 | 2.1 | 162.9 | 1600 |
| C4 | 2.5 | 230 | 19 | 4.2 | 163.2 | 1600 |
| C5 | 1.4 | 161 | 25 | 2.0 | 163.8 | 1610 |
| C6 | 1.3 | 410 | 19 | 3.9 | 163.3 | 1600 |
| C7 | 2.5 | 343 | 25 | 1.7 | 162.5 | 1590 |
| C8 | 2.8 | 302 | 32 | 3.1 | 162.1 | 1590 |
| C9 | 1.5 | 420 | 25 | 2.6 | 163.0 | 1600 |
| C10 | 1.2 | 125 | 20 | 3.4 | 163.3 | 1600 |
| C11 | 1.0 | 384 | 17 | 1.5 | 164.1 | 1620 |
| C12 | 2.9 | 417 | 30 | 3.2 | 162.8 | 1590 |
| B13 | 9.8 | 268 | 20 | 2.8 | 163.9 | 1630 |
| C13 | 2.8 | 295 | 19 | 3.2 | 163.7 | 1610 |
| B14 | 5.2 | 312 | 23 | 1.7 | 162.9 | 1630 |

(continued)

| | Graft/self-polymerized ratio η | D50 nm | Ash content ppm | MFR g/10min | Tm,°C | Flexural modulus MPa |
|---|---|---|---|---|---|---|
| B15 | 40.3 | 206 | 17 | 2.7 | 163.5 | 1620 |
| C15 | 2.5 | 230 | 19 | 4.2 | 163.2 | 1600 |
| B16 | 3.7 | 146 | 24 | 1.8 | 163.7 | 1610 |
| D1 | - | - | 22 | 3.4 | 163.3 | 1600 |
| D2 | 1.6 | 231 | 52 | 3.9 | 164.0 | 1640 |
| D3 | 1.7 | 542 | 24 | 2.4 | 163.2 | 1590 |
| D7 | 1.8 | 198 | 20 | 3.6 | 163.3 | 1600 |

Table 2

| | Film thickness, μm | $E_g$ (120°C) MV/m | $\rho_{vg}$ (120°C, 200MV/m) Ω·m | Energy storage density (120°C, 300MV/m) J/cm$^3$ | Energy storage efficiency (120°C, 300MV/m) % | Dielectric constant (100Hz, 120°C) | Dielectric loss (100Hz, 120°C) |
|---|---|---|---|---|---|---|---|
| C1 | 7.9 | 584 | 1.17E+14 | 0.758 | 95.6 | 2.29 | 2.96E-04 |
| C2 | 7.6 | 578 | 1.45E+14 | 0.819 | 92.3 | 2.34 | 8.83E-04 |
| C3 | 8.1 | 583 | 1.10E+14 | 0.924 | 94.3 | 2.35 | 9.70E-04 |
| C4 | 9.4 | 585 | 1.04E+14 | 0.759 | 97.0 | 2.41 | 1.05E-03 |
| C5 | 9.2 | 575 | 1.46E+14 | 0.800 | 94.7 | 2.45 | 1.30E-03 |
| C6 | 9.0 | 561 | 6.84E+13 | 0.728 | 90.5 | 2.36 | 8.98E-04 |
| C7 | 8.5 | 572 | 1.22E+14 | 0.765 | 93.4 | 2.47 | 1.37E-04 |
| C8 | 8.1 | 563 | 8.56E+13 | 0.721 | 90.1 | 2.26 | 1.34E-03 |
| C9 | 8.7 | 566 | 7.62E+13 | 0.730 | 90.6 | 2.33 | 9.45E-04 |
| C10 | 8.3 | 559 | 7. SOE+13 | 0.724 | 91.2 | 2.32 | 1.00E-03 |
| C11 | 8.3 | 533 | 9.60E+13 | 0.723 | 90.1 | 2.23 | 1.46E-03 |
| C12 | 8.2 | 547 | 8.70E+13 | 0.730 | 91.3 | 2.29 | 1.24E-03 |
| B13 | 8.1 | 590 | 9.77E+14 | 0.821 | 96.0 | 2.27 | 2.29E-04 |
| C13 | 7.9 | 584 | 1.17E+14 | 0.758 | 95.6 | 2.29 | 2.96E-04 |
| B14 | 9.3 | 579 | 8.75E+14 | 0.922 | 96.1 | 2.30 | 2.43E-04 |
| B15 | 8.8 | 589 | 7.27E+14 | 0.833 | 97.1 | 2.35 | 5.46E-04 |
| C15 | 9.4 | 585 | 1.04E+14 | 0.759 | 97.0 | 2.41 | 1.05E-03 |
| B16 | 8.9 | 588 | 1.01E+15 | 0.931 | 95.0 | 2.30 | 8.03E-04 |
| D1 | 9.0 | 526 | 6.00E+13 | 0.708 | 89.4 | 2.28 | 1.61E-03 |
| D2 | 9.2 | 482 | 8.40E+13 | 0.613 | 81.2 | 2.31 | 1.98E-03 |
| D3 | 9.5 | 535 | 4.66E+13 | 0.692 | 85.5 | 2.43 | 2.87E-03 |
| D4 | 9.1 | 496 | 5.80E+13 | 0.596 | 86.4 | 2.20 | 2.10E-03 |
| D6 | 7.0 | 564 | 7.30E+13 | 0.719 | 75.7 | 2.20 | 1.30E-03 |
| D7 | 9.0 | 582 | 1.15E+14 | 0.745 | 94.7 | 2.42 | 1.09E-03 |

By comparing D1 with C1, it can be seen that graft modification can significantly improve the dielectric and energy storage properties of polypropylene.

By comparing D2 with C1, it can be seen that the use of high ash polypropylene as the reaction raw material results in a smaller size of the grafted phase, and significantly lower energy storage efficiency and energy storage property than those of low ash polypropylene modifier even under the same preparation conditions.

By comparing D3 with C9 and D1, it can be seen that if the size of the dispersion phase is too large, the breakdown strength of the product is hardly improved compared with D1, and other dielectric properties and energy storage properties are not obviously improved compared with D1; the properties of the product are significantly different from Example C9 which involves graft modification.

By comparing D4 with C1-C12, it can be seen that, in the case of directly adding a graft monomer polymer, the interface acting force of the blend of the graft monomer polymer and polypropylene is weaker, the breakdown strength is low, and the energy storage property is reduced to some extent compared with D1.

By comparing D5 and C2, it can be seen that the graft-modified polypropylene material can still form a film normally at a higher functional monomer addition, but cannot form a film due to the film was broken during processing after adding a large amount of functional monomer polymer.

By comparing D6 with C1-C12, it can be seen that the film according to the invention has the advantages that the energy storage efficiency at 120°C is obviously higher than that of a commercially available high-temperature capacitor film, and the energy storage density and the dielectric property are equivalent to or slightly superior to those of the commercially available high-temperature capacitor film.

It can be seen from C11-C12 that controlling the particle size of polypropylene base material to the preferred range can make the product have better insulation property and energy storage property.

By comparing B13 with C13, B15 with C15, it can be seen that the dielectric properties of the material can be effectively improved (the direct current volume resistivity is greatly improved) by reducing the influence of self-polymerized product through the solvent washing process.

The final products of B15 and D7 contain the same total amount of grafting monomers. Through comparison of B15 with D7 and determination of TSDC, it can be seen that, under the condition that the total content of the grafting monomers is the same, B15 with a higher graft/self-polymerized ratio $\eta$ has an obviously changed grafted phase composition, so that different charge traps are generated, and finally, the dielectric property of the material can be effectively improved.

Example 17

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement, 7.2 g of tert-butyl peroxy (2-ethylhexanoate) and 400 g of styrene were formulated into a uniform solution, then added into the reaction kettle, and mixed with stirring with the powder for 30 min, to which was added 17.8 kg of deionized water that has been deaerated, and the reaction mixture was heated to 50°C and swelled for 2 h. The swelled powder was heated to 95°C, and reacted for 4 h. After the end of the reaction, the reaction product was cooled, filtered to remove liquid components, and dried at 70°C in vacuum for 10 h to obtain polypropylene-g-styrene powder. The obtained graft-modified polypropylene was tested in aspects of graft/self-polymerized ratio $\eta$, D50, ash content, MFR, Tm and flexural modulus. The results are shown in Table 4.

The above polypropylene-g-styrene powder, antioxidant 1010/168/501 (in a weight ratio of 1:1:0.03) and a processing aid were weighed, and added into a high-speed stirrer for high-speed stirring for 30 sec. The materials were pelletized by a WP25 type twin-screw extruder from Coperion Co. at the partition temperature of 190-200-210-220-230-230-210°C, and the screw speed of 300 rpm. The total amount of the antioxidant was 0.3 part by weight, and the fluoropolymer as the processing aid was 0.1 part by weight, based on 100 parts by weight of the modified polypropylene.

The obtained pellets were dried in a hot air oven, and then the dried pellets were added into a LCR400 type extrusion casting machine from Labtech Co., Sweden, for melt extrusion and casting to obtain a cast sheet, wherein the temperature of an extruder for melt extrusion was 230°C, the temperature of a screen changing area was controlled at 230°C, the temperature of a machine head was controlled at 230°C, the temperature of a casting roller was controlled at 25°C, and a thick cast sheet was prepared.

The above thick cast sheet was put into a stretching fixture of a film biaxial stretching equipment, and subjected to a biaxial stepwise stretching process (i.e., stretching first in MD and then in TD). The process conditions of each step were shown in Table 3: the MD preheating temperature was 155°C, the MD stretching temperature was 155°C, the MD stretching ratio was 5 times, and the MD stretching rate was 200%/s; the TD preheating temperature was 170°C, the TD stretching temperature was 170°C, the TD stretching ratio was 7 times, and the TD stretching rate was 300%/s; the film setting temperature was 175°C, whereby a biaxially oriented polypropylene film was obtained.

The obtained film was tested for tensile properties, electrical properties and the like. The performance parameters of the obtained polypropylene film are shown in Tables 5, 6.

Example 18

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 13.5 g of tert-butyl peroxy (2-ethylhexanoate) and 1001 g of styrene were formulated into a uniform solution, then added into the reaction kettle, and mixed with stirring with the powder. The reaction mixture was heated to 40°C and swelled for 3 h. Then, 36.0 kg of deionized water that has been deaerated and preheated to 40°C was added through a charging tank. The reaction kettle was heated to 90°C, and the reaction was carried out for 6 h. After the end of the reaction, the reaction product was cooled, filtered to remove liquid components, and dried at 70°C in vacuum for 10 h to obtain polypropylene-g-styrene powder.

The above polypropylene-g-styrene powder, antioxidant 1035/168/501 (in a weight ratio of 1:1:0.03) and a processing aid were added into a high-speed stirrer for high-speed stirring for 30 sec. The materials were pelletized by a WP25 type twin-screw extruder from Coperion Co. at the partition temperature of 190-200-210-220-230-230-210°C, and the screw speed of 300 rpm. The total amount of the antioxidant was 0.5 part by weight, and the fluoropolymer as the processing aid was 0.2 part by weight, based on 100 parts by weight of the modified polypropylene.

In this example, the film was prepared according to the same method as in Example 17 except that the biaxial stretching process conditions were different, as shown in Table 3. The structure and performance parameters of the obtained graft-modified polypropylene and the obtained polypropylene film are shown in Table 4, 5, 6.

Example 19

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 3.1 g of dibenzoyl peroxide and 112 g of styrene and 13.9 g of maleic anhydride were formulated into a uniform solution, then added into the reaction kettle, and mixed with stirring with the powder. The obtained mixture was swelled at room temperature for 8 h, and heated to 92°C. Then, 16.4 kg of deionized water that has been deaerated and preheated to 92°C was added through a charging tank, and the reaction was carried out for 4 h. After the end of the reaction, the reaction product was cooled, filtered to remove liquid components, and dried at 70°C in vacuum for 10 h to obtain polypropylene-g-maleic anhydride/styrene powder.

The above modified polypropylene, antioxidant 1010/168/501 (in a weight ratio of 1:1:0.05) and a fluoropolymer were weighed, and added into a high-speed stirrer for high-speed stirring for 30 sec. The materials were pelletized by a WP25 type twin-screw extruder from Coperion Co. at the partition temperature of 190-200-210-220-230-230-210°C, and the screw speed of 300 rpm. The total amount of the antioxidant was 0.3 part by weight, and the fluoropolymer was 0.1 part by weight, based on 100 parts by weight of the modified polypropylene.

In this example, the film was prepared according to the same method as in Example 17 except that the biaxial stretching process conditions were different, as shown in Table 3. The structure and performance parameters of the obtained graft-modified polypropylene and the obtained polypropylene film are shown in Table 4, 5, 6.

Example 20

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 2.5 g of dibenzoyl peroxide and 250.5 g of methyl methacrylate were formulated into a uniform solution, then added into the reaction kettle, and mixed with stirring with the powder for 30 min, to which was added 26.3 kg of deionized water that has been deaerated. The reaction kettle was heated to 91°C, and the reaction was carried out for 3 h. After the end of the reaction, the reaction product was cooled, filtered to remove liquid components, and dried at 70°C in vacuum for 10 h to obtain polypropylene-g-methyl methacrylate powder.

The above polypropylene-g-methyl methacrylate, antioxidant 1076/168/501 (in a weight ratio of 1:1:0.04) and a fluoropolymer were weighed, and added into a high-speed stirrer for high-speed stirring for 30 sec. The materials were pelletized by a WP25 type twin-screw extruder from Coperion Co. at the partition temperature of 190-200-210-220-230-230-210°C, and the screw speed of 300 rpm. The total amount of the antioxidant was 0.3 part by weight, and the fluoropolymer was 0.1 part by weight, based on 100 parts by weight of the modified polypropylene.

In this example, the film was prepared according to the same method as in Example 17 except that the biaxial stretching process conditions were different, as shown in Table 3. The structure and performance parameters of the obtained graft-modified polypropylene and the obtained polypropylene film are shown in Table 4, 5, 6.

Example 21

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 6.2 g of dibenzoyl peroxide and 198.0 g of styrene and 52.0 g of maleic anhydride were formulated into a uniform solution, then added into the reaction kettle, and mixed with stirring with the powder. The obtained mixture was swelled at room temperature for 6 h, and heated to 90°C. Then, 22.6 kg of deionized water that has been deaerated and preheated to 90°C was added through a charging tank, and the reaction was carried out for 4 h. After the end of the reaction, the reaction product was cooled, filtered to remove liquid components, and dried at 70°C in vacuum for 10 h to obtain polypropylene-g-maleic anhydride/styrene powder.

The above polypropylene-g-styrene/maleic anhydride, antioxidant 1010/168/501 (in a weight ratio of 1:1:0.05) and a fluoropolymer were weighed, and added into a high-speed stirrer for high-speed stirring for 30 sec. The materials were pelletized by a WP25 type twin-screw extruder from Coperion Co. at the partition temperature of 190-200-210-220-230-230-210°C, and the screw speed of 300 rpm. The total amount of the antioxidant was 0.3 part by weight, and the fluoropolymer was 0.1 part by weight, based on 100 parts by weight of the modified polypropylene.

In this example, the film was prepared according to the same method as in Example 17 except that the biaxial stretching process conditions were different, as shown in Table 3. The structure and performance parameters of the obtained graft-modified polypropylene and the obtained polypropylene film are shown in Table 4, 5, 6.

Example 22

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 31 g of lauroyl peroxide and 603 g of vinyltriethoxysilane were formulated into a uniform solution, then added into the reaction kettle, and mixed with stirring with the powder for 20 min, to which was added 19.6 kg of deionized water that has been deaerated. The reaction kettle was heated to 91°C, and the reaction was carried out for 7 h. After the end of the reaction, the reaction product was cooled, filtered to remove liquid components, and dried at 70°C in vacuum for 10 h to obtain polypropylene-g-vinyltriethoxysilane powder.

The obtained powder was pelletized and a film product was prepared, the method and conditions being the same as those of Example 17. The structure and performance parameters of the obtained graft-modified polypropylene and the obtained polypropylene film are shown in Table 4, 5, 6.

Example 23

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 6.2 g of dibenzoyl peroxide and 115.0 g of methyl acrylate and 38.0 g of acrylic acid were formulated into a uniform solution, then added into the reaction kettle, mixed with stirring with the powder for 40 min, and heated to 95°C. Then, 36.1 kg of deionized water that has been deaerated and preheated to 90°C was added through a charging tank, and the reaction was carried out for 4 h. After the end of the reaction, the reaction product was cooled, filtered to remove liquid components, and dried at 70°C in vacuum for 10 h to obtain polypropylene-g-methyl acrylate/acrylic acid powder.

The obtained powder was pelletized and a film product was prepared, the method and conditions being the same as those of Example 17. The structure and performance parameters of the obtained graft-modified polypropylene and the obtained polypropylene film are shown in Table 4, 5, 6.

Example 24

PP1 powder in Example 17 was replaced with PP3 powder sieved from a middle layer of a sieving machine, while other preparation conditions and method were the same as those of Example 17. The obtained polypropylene film was tested for various performance parameters. The structure and performance parameters of the obtained graft-modified polypropylene and the obtained polypropylene film are shown in Table 4, 5, 6.

Example 25

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 8.8 g of dibenzoyl peroxide and 355 g of 4-vinylpyridine were formulated into a uniform solution, then added into the reaction kettle, and mixed with stirring with the powder for 30 min, to which was added 27.8 kg of deionized water

that has been deaerated, and the reaction mixture was heated to 50°C and swelled for 2 h. The reaction kettle was heated to 92°C, and the reaction was carried out for 6 h. After the end of the reaction, the reaction product was cooled, filtered to remove liquid components, and dried at 70°C in vacuum for 10 h to obtain polypropylene-g-4-vinylpyridine powder.

The obtained powder was pelletized and a film product was prepared, the method and conditions being the same as those of Example 17. The structure and performance parameters of the obtained graft-modified polypropylene and the obtained polypropylene film are shown in Table 4, 5, 6.

Example 26

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 1.35 g of dibenzoyl peroxide and 76 g of glycidyl methacrylate were formulated into a uniform solution, then added into the reaction kettle, and mixed with stirring with the powder for 30 min, to which was added 16.7 kg of deionized water that has been deaerated. The reaction kettle was heated to 93°C, and the reaction was carried out for 2.5 h. After the end of the reaction, the reaction product was cooled, filtered to remove liquid components, and dried at 70°C in vacuum for 10 h to obtain polypropylene-g-glycidyl methacrylate powder.

The obtained powder was pelletized and a film product was prepared, the method and conditions being the same as those of Example 17. The structure and performance parameters of the obtained graft-modified polypropylene and the obtained polypropylene film are shown in Table 4, 5, 6.

Example 27

Modified polypropylene and polypropylene film were prepared according to the method of Example 17, except for that the antioxidant was antioxidant 1010/168 (in a weight ratio of 1:1). The structure and performance parameters of the obtained graft-modified polypropylene and the obtained polypropylene film are shown in Table 4, 5, 6.

Example 28

Modified polypropylene and polypropylene film were prepared according to the method of Example 18, except for that the antioxidant was antioxidant 501. The structure and performance parameters of the obtained graft-modified polypropylene and the obtained polypropylene film are shown in Table 4, 5, 6.

Example 29

Modified polypropylene and polypropylene film were prepared according to the method of Example 19, except for that the antioxidant was antioxidant 1010/168/501 (in a weight ratio of 1:1:0.01). The structure and performance parameters of the obtained graft-modified polypropylene and the obtained polypropylene film are shown in Table 4, 5, 6.

Example 30

PP1 powder sieved from a middle layer of a sieving machine in Example 17 was replaced with PP1 powder sieved from an upper layer of the sieving machine, while other preparation conditions and method were the same as those of Example 17. The structure and performance parameters of the obtained graft-modified polypropylene and the obtained polypropylene film are shown in Table 4, 5, 6.

Example 31

PP1 powder sieved from a middle layer of a sieving machine in Example 17 was replaced with PP1 powder sieved from a bottom layer of the sieving machine, while other preparation conditions and method were the same as those of Example 17. The structure and performance parameters of the obtained graft-modified polypropylene and the obtained polypropylene film are shown in Table 4, 5, 6.

Example 32

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement, 7.2 g of tert-butyl peroxy (2-ethylhexanoate) and 400 g of styrene were formulated into a uniform solution, then added into the reaction kettle, and mixed with stirring with the powder for 30 min, to which was added 17.8 kg of

deionized water that has been deaerated, and the reaction mixture was heated to 50°C and swelled for 2 h. The swelled powder was heated to 95°C, and reacted for 4 h. After the end of the reaction, the reaction product was cooled, filtered to remove liquid components, and dried at 70°C in vacuum for 10 h to obtain polypropylene-g-styrene powder C32. The obtained graft-modified polypropylene was tested in aspects of graft/self-polymerized ratio η, D50, ash content, MFR, Tm and flexural modulus. The results are shown in Table 4.

1.5 kg of the above polypropylene-g-styrene powder C32 was weighed, 3 kg of xylene and 20 kg of THF were added, then the reaction system was sealed, and heated to 70°C and stirred for washing for 5 h. After the end of stirring, the liquid phase was removed by filtration, and the product was dried at 70°C in vacuum for 10 h to obtain polypropylene-g-styrene powder B32. The obtained graft-modified polypropylene was tested in aspects of graft/self-polymerized ratio η, D50, ash content, MFR, Tm and flexural modulus. The results are shown in Table 4.

The above polypropylene-g-styrene powder (C32 or B32), antioxidant 1010/168/501 (in a weight ratio of 1:1:0.03) and a processing aid were weighed, and added into a high-speed stirrer for high-speed stirring for 30 sec. The materials were pelletized by a WP25 type twin-screw extruder from Coperion Co. at the partition temperature of 190-200-210-220-230-230-210°C, and the screw speed of 300 rpm. The total amount of the antioxidant was 0.3 part by weight, and the fluoropolymer as the processing aid was 0.1 part by weight, based on 100 parts by weight of the modified polypropylene.

The obtained pellets were dried in a hot air oven, and then the dried pellets were added into a LCR400 type extrusion casting machine from Labtech Co., Sweden, for melt extrusion and casting to obtain a cast sheet, wherein the temperature of an extruder for melt extrusion was 230°C, the temperature of a screen changing area was controlled at 230°C, the temperature of a machine head was controlled at 230°C, the temperature of a casting roller was controlled at 25°C, and a thick cast sheet was prepared.

The above thick cast sheet was put into a stretching fixture of a film biaxial stretching equipment, and subjected to a biaxial stepwise stretching process (i.e., stretching first in MD and then in TD). The process conditions of each step were shown in Table 3: the MD preheating temperature was 155°C, the MD stretching temperature was 155°C, the MD stretching ratio was 5 times, and the MD stretching rate was 200%/s; the TD preheating temperature was 170°C, the TD stretching temperature was 170°C, the TD stretching ratio was 7 times, and the TD stretching rate was 300%/s; the film setting temperature was 175°C, whereby biaxially oriented polypropylene films C32 and B32 were obtained.

The obtained film was tested for tensile properties, electrical properties and the like. The performance parameters of the obtained polypropylene film are shown in Tables 5, 6.

Example 33

3.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 8.2 g of tert-butyl peroxy (2-ethylhexanoate) and 63 g of styrene, 470 g of methyl methacrylate were formulated into a uniform solution, then added into the reaction kettle, and mixed with stirring with the powder. The reaction mixture was heated to 60°C and swelled for 2 h. Then, 18.1 kg of deionized water that has been deaerated and preheated to 60°C was added through a charging tank. The reaction kettle was heated to 90°C, and the reaction was carried out for 6 h. After the end of the reaction, the reaction product was cooled, filtered to remove liquid components. 23 kg of acetone and 2 kg of n-heptane were added, the obtained solution was heated to 55°C, and stirred for 3 h. After the end of stirring, the liquid phase was removed by filtration, and the product was dried at 70°C in vacuum for 10 h to obtain polypropylene-g-methyl methacrylate/styrene powder B33.

The above polypropylene-g-methyl methacrylate/styrene powder, antioxidant 1035/168/501 (in a weight ratio of 1:1:0.03) and a processing aid were weighed, and added into a high-speed stirrer for high-speed stirring for 30 sec. The materials were pelletized by a WP25 type twin-screw extruder from Coperion Co. at the partition temperature of 190-200-210-220-230-230-210°C, and the screw speed of 300 rpm. The total amount of the antioxidant was 0.5 part by weight, and the fluoropolymer as the processing aid was 0.2 part by weight, based on 100 parts by weight of the modified polypropylene.

The film was prepared according to the same method as in Example 32 except that the biaxial stretching process conditions were different, as shown in Table 3. The structure and performance parameters of the obtained graft-modified polypropylene and the obtained polypropylene film B33 are shown in Table 4, 5, 6.

Example 34

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 2.5 g of dibenzoyl peroxide and 250.5 g of methyl methacrylate were formulated into a uniform solution, then added into the reaction kettle, and mixed with stirring with the powder for 30 min, to which was added 26.3 kg of deionized

water that has been deaerated. The reaction kettle was heated to 91°C, and the reaction was carried out for 3 h. After the end of the reaction, the reaction product was cooled, filtered to remove liquid components, and dried at 70°C in vacuum for 10 h to obtain polypropylene-g-methyl methacrylate powder C34.

3 kg of the above polypropylene-g-methyl methacrylate powder C34 was weighed, 10 kg of xylene and 20 kg of ethyl acetate were added, then the reaction system was sealed, and heated to 70°C and stirred for washing for 7 h. After the end of stirring, the liquid phase was removed by filtration, and the product was dried at 70°C in vacuum for 10 h to obtain 2.965 kg polypropylene-g-methyl methacrylate powder B34.

The above polypropylene-g-methyl methacrylate powder (C34 or B34), antioxidant 1076/168/501 (in a weight ratio of 1:1:0.04) and a fluoropolymer were weighed, and added into a high-speed stirrer for high-speed stirring for 30 sec. The materials were pelletized by a WP25 type twin-screw extruder from Coperion Co. at the partition temperature of 190-200-210-220-230-230-210°C, and the screw speed of 300 rpm. The total amount of the antioxidant was 0.3 part by weight, and the fluoropolymer was 0.1 part by weight, based on 100 parts by weight of the modified polypropylene.

The film was prepared according to the same method as in Example 32 except that the biaxial stretching process conditions were different, as shown in Table 3. The structure and performance parameters of the obtained graft-modified polypropylene and the obtained polypropylene films C34 and B34 are shown in Table 4, 5, 6.

Example 35

1.5 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 1.9 g of dibenzoyl peroxide and 59.7 g of styrene and 15.6 g of maleic anhydride were formulated into a uniform solution, then added into the reaction kettle, and mixed with stirring with the powder. The obtained mixture was swelled at room temperature for 6 h, and heated to 90°C. Then, 7.0 kg of deionized water that has been deaerated and preheated to 90°C was added through a charging tank, and the reaction was carried out for 4 h. After the end of the reaction, the reaction product was cooled, filtered to remove liquid components. 25 kg of acetone was added, and the obtained solution was heated to 55°C, and stirred for 5 h. After the end of stirring, the liquid phase was removed by filtration, and the product was dried at 70°C in vacuum for 10 h to obtain polypropylene-g-maleic anhydride/styrene powder B35.

The above polypropylene-g-maleic anhydride/styrene powder, antioxidant 1010/168/501 (in a weight ratio of 1:1:0.05) and a fluoropolymer were weighed, and added into a high-speed stirrer for high-speed stirring for 30 sec. The materials were pelletized by a WP25 type twin-screw extruder from Coperion Co. at the partition temperature of 190-200-210-220-230-230-210°C, and the screw speed of 300 rpm. The total amount of the antioxidant was 0.3 part by weight, and the fluoropolymer was 0.1 part by weight, based on 100 parts by weight of the modified polypropylene.

The film was prepared according to the same method as in Example 32 except that the biaxial stretching process conditions were different, as shown in Table 3. The structure and performance parameters of the obtained graft-modified polypropylene and the obtained polypropylene film B35 are shown in Table 4, 5, 6.

Comparative Example 8

5.0 kg of PP1 powder sieved from a middle layer of a sieving machine was pelletized and a film product was prepared, the antioxidant was antioxidant 1010/168 (in a weight ratio of 1:1), while other preparation conditions and method were the same as those of Example 17. The obtained product was tested for various performance parameters. The structure and performance parameters of the obtained polypropylene and the obtained polypropylene film are shown in Table 4, 5, 6.

Comparative Example 9

PP1 powder in Example 17 was replaced with PP4 powder sieved from a middle layer of a sieving machine, 10.8 kg of deionized water was added, while other preparation conditions and method were the same as those of Example 1, The obtained product was tested for various performance parameters. The structure and performance parameters of the obtained graft-modified polypropylene and the obtained polypropylene film are shown in Table 4, 5, 6.

Comparative Example 10

5.0 kg of PP2 powder sieved from a middle layer of a sieving machine was added into a 50 L reaction kettle with a double-layer four-blade stirring paddle and a baffle, the reaction system was sealed, and oxygen was removed by nitrogen replacement. 18.6 g of dibenzoyl peroxide and 735 g of 4-vinylpyridine were formulated into a uniform solution, then added into the reaction kettle, and mixed with stirring with the powder for 30 min, to which was added 36.7 kg of deionized water that has been deaerated, and the reaction mixture was heated to 50°C and swelled for 2 h. The reaction kettle was heated

to 92°C, and the reaction was carried out for 6 h. After the end of the reaction, the reaction product was cooled, filtered to remove liquid components, and dried at 70°C in vacuum for 10 h to obtain polypropylene-g-4-vinylpyridine powder.

The obtained powder was pelletized and a film product was prepared, the antioxidant was antioxidant 1010/168 (in a weight ratio of 1:1), the method and conditions being the same as those of Example 17. The structure and performance parameters of the obtained graft-modified polypropylene and the obtained polypropylene film are shown in Table 4, 5, 6.

Comparative Example 11

5.0 kg of PP1 powder sieved from a middle layer of a sieving machine, and 400 g of polystyrene GPPS-123 were pelletized and a film product was prepared, while other preparation conditions and method were the same as those of Example 17. The obtained product was tested for various performance parameters. The performance parameters of the obtained polypropylene film are shown in Table 5, 6.

Comparative Example 12

5.0 kg of PP1 powder sieved from a middle layer of a sieving machine, and 1000 g of polystyrene GPPS-123 were pelletized and a film product was prepared, the antioxidant was antioxidant 1010/168 (in a weight ratio of 1:1), while other preparation conditions and method were the same as those of Example 18. When biaxially oriented, the film was broken.

Comparative Example 13

Tongfeng MPP03 high temperature film was tested for various performance parameters. The results are shown in Tables 5, 6.

Comparative Example 14

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement. 2.0 g of dibenzoyl peroxide and 188.2 g of methyl methacrylate were formulated into a uniform solution, then added into the reaction kettle, and mixed with stirring with the powder for 30 min, to which was added 25.9 kg of deionized water that has been deaerated. The reaction kettle was heated to 90°C, and the reaction was carried out for 3 h. After the end of the reaction, the reaction product was cooled, filtered to remove liquid components, and dried at 70°C in vacuum for 10 h to obtain 5.168 kg polypropylene-g-methyl methacrylate powder D14.

The above polypropylene-g-methyl methacrylate powder, antioxidant 1076/168/501 (in a weight ratio of 1:1:0.04) and a fluoropolymer were weighed, and added into a high-speed stirrer for high-speed stirring for 30 sec. The materials were pelletized by a WP25 type twin-screw extruder from Coperion Co. at the partition temperature of 190-200-210-220-230-230-210°C, and the screw speed of 300 rpm. The total amount of the antioxidant was 0.3 part by weight, and the fluoropolymer was 0.1 part by weight, based on 100 parts by weight of the modified polypropylene.

The film was prepared according to the same method as in Example 32. The structure and performance parameters of the obtained graft-modified polypropylene and the obtained polypropylene film D14 are shown in Table 4, 5, 6.

Comparative Example 15

5.0 kg of PP1 powder sieved from a middle layer of a sieving machine was added into a 50 L reaction kettle with a double-layer four-blade stirring paddle and a baffle, the reaction system was sealed, and oxygen was removed by nitrogen replacement, 3.9 g of tert-butyl peroxy (2-ethylhexanoate) and 200 g of styrene were formulated into a uniform solution, then added into the reaction kettle, and mixed with stirring with the powder for 30 min, to which was added 17.2 kg of deionized water that has been deaerated, and the reaction mixture was heated to 50°C and swelled for 2 h. The swelled powder was heated to 95°C, and reacted for 4 h. After the end of the reaction, the reaction product was cooled, filtered to remove liquid components, and dried at 70°C in vacuum for 10 h to obtain 5.168 kg polypropylene-g-styrene powder, with a graft/self-polymerized ratio $\eta$ of 2.11.

The obtained polypropylene-g-styrene powder and 159 g of polystyrene GPPS-123 were blended, pelletized and a film product was prepared, while other preparation conditions and method were the same as those of Example 17. The obtained blend and the obtained polypropylene film were tested for various structure and performance parameters. The results are shown in Tables 4, 5, 6.

Table 3 Biaxial stretching process conditions

| Name | MD preheating temperatu re °C | MD stretching temperatu re °C | MD stretch ing ratio | MD stretch ing rate % /S | TD preheating temperatu re °C | TD stretching temperatu re °C | TD stretch ing ratio | TD stretch ing rate % /S |
|---|---|---|---|---|---|---|---|---|
| Exam ple 17 | 155 | 155 | 5 | 200 | 170 | 170 | 7 | 300 |
| Exam ple 18 | 160 | 160 | 5 | 100 | 175 | 175 | 8 | 100 |
| Exam ple 19 | 155 | 155 | 5 | 100 | 175 | 175 | 5 | 100 |
| Exam ple 20 | 160 | 160 | 5 | 50 | 175 | 175 | 7 | 100 |
| Exam ple 21 | 155 | 155 | 4 | 50 | 165 | 165 | 6 | 150 |
| Exam ple 32 | 155 | 155 | 5 | 200 | 170 | 170 | 7 | 300 |
| Exam ple 33 | 160 | 160 | 5 | 100 | 175 | 175 | 8 | 100 |
| Exam ple 34 | 160 | 160 | 5 | 50 | 175 | 175 | 7 | 100 |
| Exam ple 35 | 155 | 155 | 4 | 50 | 165 | 165 | 6 | 150 |

Table 4

| | Graft/ self-polymerized ratio η | D50 nm | Ash content ppm | MFR, g/10min | Tm,°C | Flexural modulus MPa |
|---|---|---|---|---|---|---|
| C17 | 2.8 | 295 | 19 | 3.2 | 163.7 | 1610 |
| C18 | 1.3 | 386 | 22 | 2.0 | 162.3 | 1620 |
| C19 | 1.1 | 89 | 26 | 2.1 | 162.9 | 1600 |
| C20 | 2.5 | 230 | 19 | 4.2 | 163.2 | 1600 |
| C21 | 1.4 | 161 | 25 | 2.0 | 163.8 | 1610 |
| C22 | 1.3 | 410 | 19 | 3.9 | 163.3 | 1600 |
| C23 | 2.5 | 343 | 25 | 1.7 | 162.5 | 1590 |
| C24 | 2.8 | 302 | 32 | 3.1 | 162.1 | 1590 |
| C25 | 1.5 | 420 | 25 | 2.6 | 163.0 | 1600 |
| C26 | 1.2 | 125 | 20 | 3.4 | 163.3 | 1600 |
| C27 | 2.8 | 295 | 19 | 3.2 | 163.7 | 1610 |
| C28 | 1.3 | 386 | 22 | 2.0 | 162.3 | 1620 |
| C29 | 1.1 | 89 | 26 | 2.1 | 162.9 | 1600 |
| C30 | 1.0 | 384 | 17 | 1.5 | 164.1 | 1620 |
| C31 | 2.9 | 417 | 30 | 3.2 | 162.8 | 1590 |
| B32 | 9.8 | 268 | 20 | 2.8 | 163.9 | 1630 |
| C32 | 2.8 | 295 | 19 | 3.2 | 163.7 | 1610 |
| B33 | 5.2 | 312 | 23 | 1.7 | 162.9 | 1630 |
| B34 | 40.3 | 206 | 17 | 2.7 | 163.5 | 1620 |
| C34 | 2.5 | 230 | 19 | 4.2 | 163.2 | 1600 |
| B35 | 3.7 | 146 | 24 | 1.8 | 163.7 | 1610 |
| D8 | - | - | 22 | 3.4 | 163.3 | 1600 |
| D9 | 1.6 | 231 | 52 | 3.9 | 164.0 | 1640 |
| D10 | 1.7 | 542 | 24 | 2.4 | 163.2 | 1590 |
| D14 | 1.8 | 198 | 20 | 3.5 | 163.3 | 1600 |

(continued)

| | Graft/ self-polymerized ratio η | D50 nm | Ash content ppm | MFR, g/10min | Tm,°C | Flexural modulus MPa |
|---|---|---|---|---|---|---|
| D15 | 0.54 | 445 | 19 | 3.4 | 163.3 | 1580 |

Table 5

| | $E_g$ (120°C) MV/m | $\rho_{vg}$ (120°C, 200MV/m) Ω·m | Energy storage density (120°C, 300MV/m) J/cm$^3$ | Energy storage efficiency (120°C, 300MV/m) % | Dielectric constant (100Hz, 120°C) | Dielectric loss (100Hz, 120°C) |
|---|---|---|---|---|---|---|
| C17 | 579 | 1.16E+14 | 0.767 | 95.2 | 2.37 | 2.89E-04 |
| C18 | 580 | 1.47E+14 | 0.842 | 93.0 | 2.35 | 8.90E-04 |
| C19 | 584 | 1.12E+14 | 0.934 | 93.7 | 2.34 | 9.62E-04 |
| C20 | 581 | 1.09E+14 | 0.772 | 97.1 | 2.42 | 1.17E-03 |
| C21 | 579 | 1.34E+14 | 0.815 | 95.3 | 2.45 | 1.22E-03 |
| C22 | 568 | 6.95E+13 | 0.741 | 91.0 | 2.38 | 9.03E-04 |
| C23 | 575 | 1.24E+14 | 0.787 | 93.1 | 2.45 | 1.41E-04 |
| C24 | 565 | 8.43E+13 | 0.726 | 91.5 | 2.29 | 1.40E-03 |
| C25 | 561 | 7.65E+13 | 0.745 | 90.4 | 2.34 | 9.57E-04 |
| C26 | 562 | 7.68E+13 | 0.737 | 91.1 | 2.36 | 1.08E-03 |
| C27 | 583 | 1.10E+14 | 0.758 | 95.4 | 2.34 | 2.93E-04 |
| C28 | 581 | 1.44E+14 | 0.825 | 92.9 | 2.33 | 8.76E-04 |
| C29 | 577 | 1.15E+14 | 0.928 | 93.4 | 2.32 | 9.71E-04 |
| C30 | 540 | 9.48E+13 | 0.742 | 90.8 | 2.28 | 1.51E-03 |
| C31 | 542 | 8.77E+13 | 0.743 | 92.2 | 2.30 | 1.30E-03 |
| B32 | 581 | 1.02E+15 | 0.838 | 95.9 | 2.24 | 2.18E-04 |
| C32 | 579 | 1.16E+14 | 0.767 | 95.2 | 2.37 | 2.89E-04 |
| B33 | 584 | 7.74E+14 | 0.915 | 96.0 | 2.32 | 1.90E-04 |
| B34 | 588 | 8.01E+14 | 0.827 | 96.9 | 2.34 | 5.55E-04 |
| C34 | 581 | 1.09E+14 | 0.772 | 97.1 | 2.42 | 1.17E-03 |
| B35 | 582 | 9.92E+14 | 0.922 | 95.7 | 2.39 | 7.88E-04 |
| D8 | 524 | 6.04E+13 | 0.702 | 89.5 | 2.26 | 1.62E-03 |
| D9 | 477 | 8.29E+13 | 0.616 | 80.9 | 2.29 | 1.95E-03 |
| D10 | 532 | 4.89 E+13 | 0.645 | 84.9 | 2.22 | 2.73E-03 |
| D11 | 492 | 5.67E+13 | 0.598 | 85.4 | 2.21 | 2.11E-03 |
| D13 | 564 | 7.30E+13 | 0.719 | 75.7 | 2.20 | 1.30E-03 |
| D14 | 585 | 1.13E+14 | 0.746 | 94.8 | 2.40 | 9.88E-04 |
| D15 | 469 | 5.01E+13 | 0.608 | 80.1 | 2.19 | 2.03E-03 |

Table 6

| | Film thickness, μm | Tensile strength, MPa | | Elongation at break, % | |
|---|---|---|---|---|---|
| | | MD | TD | MD | TD |
| C17 | 7.4 | 155 | 226 | 258 | 85 |

(continued)

| | Film thickness, μm | Tensile strength, MPa | | Elongation at break, % | |
|---|---|---|---|---|---|
| | | MD | TD | MD | TD |
| C18 | 6.3 | 151 | 213 | 244 | 74 |
| C19 | 9.4 | 145 | 215 | 266 | 67 |
| C20 | 7.6 | 143 | 209 | 241 | 69 |
| C21 | 9.7 | 146 | 211 | 262 | 83 |
| C22 | 7.5 | 142 | 219 | 225 | 62 |
| C23 | 7.8 | 165 | 240 | 230 | 65 |
| C24 | 7.7 | 158 | 228 | 264 | 68 |
| C25 | 7.5 | 141 | 214 | 228 | 63 |
| C26 | 7.4 | 148 | 220 | 255 | 65 |
| C27 | 7.8 | 152 | 231 | 260 | 78 |
| C28 | 6.5 | 150 | 220 | 241 | 70 |
| C29 | 9.6 | 143 | 212 | 256 | 62 |
| C30 | 8.1 | 140 | 207 | 211 | 60 |
| C31 | 7.8 | 141 | 212 | 245 | 67 |
| B32 | 7.9 | 157 | 227 | 278 | 89 |
| C32 | 7.4 | 155 | 226 | 258 | 85 |
| B33 | 8.8 | 141 | 203 | 241 | 70 |
| B34 | 8.2 | 151 | 217 | 250 | 73 |
| C34 | 7.6 | 143 | 209 | 241 | 69 |
| B35 | 9.1 | 150 | 218 | 259 | 82 |
| D8 | 7.6 | 142 | 185 | 186 | 45 |
| D9 | 7.5 | 137 | 179 | 193 | 48 |
| D10 | 8.5 | 132 | 190 | 198 | 57 |
| D11 | 7.7 | 119 | 180 | 210 | 48 |
| D13 | 7.0 | 170 | 320 | 150 | 50 |
| D14 | 8.1 | 146 | 199 | 231 | 65 |
| D15 | 8.0 | 97 | 164 | 183 | 31 |

By comparing D8 with C17, it can be seen that graft modification can significantly improve the dielectric and energy storage properties of polypropylene.

By comparing D9 with C17, it can be seen that the use of high ash polypropylene as the reaction raw material results in a smaller size of the grafted phase, and significantly lower energy storage efficiency and energy storage property than those of low ash polypropylene modifier even under the same preparation conditions.

By comparing D10 with C25 and D8, it can be seen that if the size of the dispersion phase is too large, the breakdown strength of the product is hardly improved compared with D8, and other dielectric properties and energy storage properties are not obviously improved compared with D8; the properties of the product are significantly different from Example C25 which involves graft modification.

By comparing D11 with C17-C31, it can be seen that, in the case of directly adding a graft monomer polymer, the interface acting force of the blend of the graft monomer polymer and polypropylene is weaker, the breakdown strength is low, and the energy storage property is reduced to some extent compared with D8.

By comparing D12 with C18, it can be seen that the graft-modified polypropylene material can still form a film normally at a higher functional monomer addition, but cannot form a film due to the film was broken during processing after adding a large amount of functional monomer polymer.

By comparing D13 with C17-C31, it can be seen that the film according to the invention has the advantages that the energy storage efficiency at 120°C is obviously higher than that of a commercially available high-temperature capacitor film, and the energy storage density and the dielectric property are equivalent to or slightly superior to those of the commercially available high-temperature capacitor film.

It can be seen from C30-C31 that controlling the particle size of polypropylene base material to the preferred range can make the product have better insulation property and energy storage property.

By comparing B32 with C32, B34 with C34, it can be seen that the dielectric properties of the material can be effectively improved (the direct current volume resistivity is greatly improved) by reducing the influence of self-polymerized product through the solvent washing process.

The final products of B34 and D14 contain the same total amount of grafting monomers. Through comparison of B34 and D14 and determination of TSDC, it can be seen that, under the condition that the total content of the grafting monomers is the same, B34 with a higher graft/self-polymerized ratio $\eta$ has an obviously changed grafted phase composition, so that different charge traps are generated, and finally, the dielectric property of the material can be effectively improved.

By comparing D15 with C17, it can be seen that, when the total content of styrene is the same, the product with a higher graft/self-polymerized ratio $\eta$ has better insulation property and energy storage property.

The examples of the invention have been described above, the above description is exemplary, not exhaustive, and the invention is not limited to the examples. Without departing from the scope and spirit of the examples, many modifications and changes are obvious to those of ordinary skill in the art.

The endpoints of ranges and any values disclosed herein are not to be limited to the precise ranges or values, which are to be understood to encompass values close to those ranges or values. For numerical ranges, the endpoints of each range, the endpoints of each range and the individual point values, as well as the individual point values may be combined with each other to yield one or more new numerical ranges, which numerical ranges should be deemed to be specifically disclosed herein.

The terms "comprising" and "containing" herein are interchangeably used herein, encompassing "consisting essentially of ...", "consisting of ..." and "being".

## Claims

1. A biaxially oriented polypropylene dielectric film, **characterized in that** the raw material for preparing the biaxially oriented polypropylene dielectric film includes a modified polypropylene grafted with an alkenyl-containing functional monomer;
   the modified polypropylene grafted with an alkenyl-containing functional monomer comprises structural units derived from polypropylene as a matrix phase and structural units derived from the alkenyl-containing functional monomer as a dispersion phase; the modified polypropylene grafted with an alkenyl-containing functional monomer has an ash content of less than 50 ppm, preferably less than 36 ppm, and more preferably less than 30 ppm; the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is more than or equal to 1.0; the D50 of the dispersion phase is less than 450 nm, preferably 50-400 nm.

2. The biaxially oriented polypropylene dielectric film as claimed in claim 1, wherein the maximum working temperature of the biaxially oriented polypropylene dielectric film is ≥ 100°C, preferably 110-160°C, and more preferably 120-145°C.

3. The biaxially oriented polypropylene dielectric film as claimed in claim 1 or 2, wherein the biaxially oriented polypropylene dielectric film has at least one of the following characteristics:

   - the breakdown field strength $E_g$ at 120°C is ≥ 500 MV/m, preferably 550-800 MV/m;
   - the direct current volume resistivity $\rho_{vg}$ at 120°C and 200 MV/m field strength is ≥ $6.0\times10^{13}$ Ω·m, preferably $1.0\times10^{14}$ Ω·m -1.0 $\times10^{20}$ Ω·m, preferably $1.5\times10^{14}$ Ω·m-0.9 $\times10^{20}$ Ω·m, more preferably $2.0\times10^{14}$ Ω·m-1.0 $\times10^{17}$ Ω·m;
   - the dielectric constant at 120°C and 100 Hz is more than 2.25, preferably 2.26-2.65;
   - the dielectric loss at 120°C and 100 Hz is less than 1.55E-3, preferably less than 1.5E-3, preferably less than or equal to 1.0E-3, more preferably 1.0E-6 to 1.3E-3, and further preferably 1.0E-6 to 9E-4;
   - the energy storage density at 120°C and 300 MV/m is more than 0.720 J/cm$^3$, preferably 0.740-2.0 J/cm$^3$, more preferably 0.780-2.0 J/cm$^3$, and further preferably 0.80-2.0 J/cm$^3$;

- the energy storage efficiency at 120°C and 300 MV/m is more than 90.0%, and preferably 92.0-99.0%.

4. The biaxially oriented polypropylene dielectric film as claimed in any of claims 1-3, wherein the biaxially oriented polypropylene dielectric film has at least one of the following characteristics: the tensile strength in machine direction is ≥140 MPa, and preferably 140-170 MPa; the tensile strength in transverse direction is ≥200 MPa, and preferably 205-250 MPa; the elongation at break in machine direction is ≥ 210%, preferably ≥ 225%; the elongation at break in transverse direction is ≥60%, preferably ≥62%; the thickness is 0.5-15 μm, preferably 4-10 μm.

5. The biaxially oriented polypropylene dielectric film as claimed in claim 1, wherein the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is 1.1-1.0, preferably 1.2-6.

6. The biaxially oriented polypropylene dielectric film as claimed in claim 1, wherein the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is more than or equal to 1.5, preferably more than or equal to 2.

7. The biaxially oriented polypropylene dielectric film as claimed in any of claims 1-6, wherein the modified polypropylene grafted with an alkenyl-containing functional monomer has at least one of the following characteristics: the melt flow rate at the load of 2.16 kg at 230°C is 1-10 g/10 min, preferably 1.5-8 g/10 min, and further preferably 2-5 g/10 min; the melting temperature $T_m$ is 155-168°C, and preferably 157-165°C; the flexural modulus is 1400-2000 MPa, preferably 1500-1800 MPa.

8. The biaxially oriented polypropylene dielectric film as claimed in any of claims 1-7, wherein the alkenyl-containing functional monomer is at least one selected from monomers having a structure represented by the formula 1,

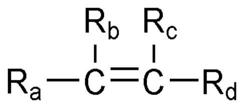 formula 1

in the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano, substituted or unsubstituted silyl; $R_a$ and $R_d$ optionally form a ring.

9. The biaxially oriented polypropylene dielectric film as claimed in claim 8, wherein $R_b$, $R_c$, $R_d$ are each independently selected from H, substituted or unsubstituted $C_1$-$C_6$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano, substituted or unsubstituted $C_3$-$C_{20}$ silyl; the substituent group is halogen, -OH, $-NH_2$, =O, $C_1$-$C_{12}$ alkyl, $C_3$-$C_6$ cycloalkyl, $C_1$-$C_{12}$ alkoxy, $C_1$-$C_{12}$ acyloxy; $R_a$ and $R_d$ optionally taken together with the double bond form a 4-6 membered heterocyclic ring.

10. The biaxially oriented polypropylene dielectric film as claimed in claim 9, wherein $R_b$, $R_c$, $R_d$ are each independently selected from H, substituted or unsubstituted $C_1$-$C_6$ alkyl;

$R_a$ is at least one selected from a group represented by formula 2, a group represented by formula 3, a group represented by formula 4, a group represented by formula 5, a group represented by formula 6 and a heterocyclic group;

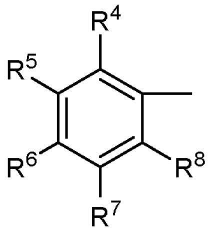

formula 2

in the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

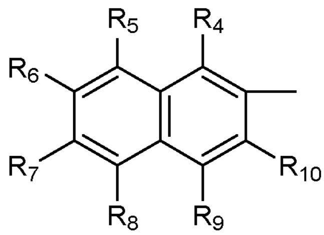

formula 3

in the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

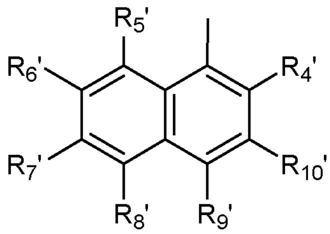

formula 4

in the formula 4, $R_4'$-$R_{10}'$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4'$-$R_{10}'$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

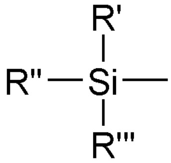

formula 5

in the formula 5, R', R", R‴ are each independently selected from substituted or unsubstituted $C_1$-$C_{12}$ linear alkyl, substituted or unsubstituted $C_3$-$C_{12}$ branched alkyl, substituted or unsubstituted $C_1$-$C_{12}$ alkoxy, substituted or unsubstituted $C_1$-$C_{12}$ acyloxy; preferably, $R_1$ is $C_2$-$C_6$ alkenyl, preferably monounsaturated alkenyl; $R_2$, $R_3$, $R_4$ are each independently selected from substituted or unsubstituted $C_1$-$C_6$ linear alkyl, substituted or unsubstituted $C_3$-$C_6$ branched alkyl, substituted or unsubstituted $C_1$-$C_6$ alkoxy, substituted or unsubstituted $C_1$-$C_6$ acyloxy;

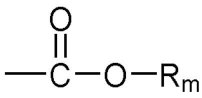
formula 6

in the formula 6, $R_m$ is selected from hydrogen and/or the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is at least one selected from halogen, amino and hydroxy;
the heterocyclic group is selected from imidazolyl, pyrazolyl, carbazolyl, pyrrolidinonyl, pyridyl, piperidinyl, caprolactamyl, pyrazinyl, thiazolyl, purinyl, morpholinyl, oxazolinyl.

**11.** The biaxially oriented polypropylene dielectric film as claimed in claim 10, wherein the alkenyl-containing functional monomer is a styrenic monomer, the styrenic monomer is at least one selected from styrene, α-methylstyrene, 1-vinyl naphthalene, 2-vinyl naphthalene, mono- or polysubstituted styrene, mono- or polysubstituted α-methylstyrene,mono- or polysubstituted 1-vinyl naphthalene and mono- or polysubstituted 2-vinyl naphthalene; the substituent group preferably is at least one selected from halogen, hydroxy, amino, phosphoric group, sulfonic group, $C_1$-$C_8$ linear alkyl, $C_3$-$C_8$ branched alkyl or cycloalkyl, $C_1$-$C_6$ linear alkoxy, $C_3$-$C_8$ branched alkoxy or cycloalkoxy, $C_1$-$C_8$ linear ester group, $C_3$-$C_8$ branched ester group or cyclic ester group, Ci-Cs linear amine group and $C_3$-$C_8$ branched amine group or cyclic amine group; preferably, the styrenic monomer is at least one selected from styrene, α-methylstyrene, 2-methylstyrene, 3-methylstyrene and 4-methylstyrene.

**12.** The biaxially oriented polypropylene dielectric film as claimed in claim 10, wherein the alkenyl-containing functional monomer is an alkenyl-containing silane monomer, the alkenyl-containing silane monomer is at least one selected from vinyltriethoxysilane, vinyltrimethoxysilane, vinyltriisopropoxysilane, vinyltri-tert-butoxysilane, vinyltriacetoxysilane, methylvinyldimethoxysilane, ethylvinyldiethoxysilane, allyltriethoxysilane, allyltrimethoxysilane, allyltriisopropoxysilane, vinyltris (β-methoxyethoxy)silane, allyltris (β-methoxyethoxy)silane, allyltri-tert-butoxysilane, allyltriacetoxysilane, methylallyldimethoxysilane and ethylallyldiethoxysilane.

**13.** The biaxially oriented polypropylene dielectric film as claimed in claim 10, wherein the alkenyl-containing functional monomer is an acrylate monomer and/or an acrylic monomer, preferably, the acrylate monomer is at least one selected from methyl (methyl)acrylate, sec-butyl (methyl)acrylate, ethyl (methyl)acrylate, n-butyl (methyl)acrylate, isobutyl (methyl)acrylate, tert-butyl (methyl)acrylate, isooctyl (methyl)acrylate, dodecyl (methyl)acrylate, cocinin (methyl)acrylate, octadecyl (methyl)acrylate, dimethylaminoethyl (methyl)acrylate, diethylaminoethyl (methyl)acrylate, dimethylaminopropyl (methyl)acrylate, and glycidyl (methyl)acrylate; preferably, the acrylic monomer is at least one selected from acrylic acid, methacrylic acid and 2-ethylacrylic acid.

**14.** The biaxially oriented polypropylene dielectric film as claimed in claim 9, wherein the alkenyl-containing functional monomer is at least one selected from maleic anhydride, maleimide and derivatives thereof, itaconic anhydride, and α-methylene-γ-butyrolactone; preferably, the alkenyl-containing functional monomer is maleic anhydride.

**15.** The biaxially oriented polypropylene dielectric film as claimed in any of claims 1-14, wherein the polypropylene has the following characteristics: the particle size is 16-50 meshes; the ash content is less than 55 ppm, preferably less than 40 ppm, more preferably less than 35 ppm; the flexural modulus is 1400-2000 MPa, preferably 1500-1800 MPa.

**16.** The biaxially oriented polypropylene dielectric film as claimed in any of claims 1-15, wherein the polypropylene is a homopolypropylene or a propylene copolymer, and preferably has at least one of the following characteristics:

- the melt flow rate at the load of 2.16 kg at 230°C is 0.5-10 g/10 min, preferably 1-5 g/10 min, and further preferably 2-4 g/10 min;
- the melting temperature $T_m$ is 150°C or higher, preferably 153-180°C, further preferably 155-167°C;
- the isotacticity is more than 96%, preferably more than 96.5%; or, the total content of ethylene units and butene units is less than 3.0 mol%, preferably more than 0 and less than 0.1 mol%, or more than 0.1 mol% and less than or equal to 3.0 mol%.

**17.** The biaxially oriented polypropylene dielectric film as claimed in any of claims 1-16, wherein the modified polypropylene grafted with an alkenyl-containing functional monomer is prepared by a method comprising the following steps: in the presence of an inert gas, a reaction mixture comprising a polypropylene powder and an alkenyl-containing functional monomer is subjected to grafting reaction, and is optionally washed by a washing solvent, to obtain the modified polypropylene grafted with an alkenyl-containing functional monomer.

**18.** The biaxially oriented polypropylene dielectric film as claimed in claim 17, wherein the reaction mixture further comprises a free radical initiator and at least one of the following components: deionized water and/or an organic solvent, wherein the mass content of the deionized water is 300-800% of the sum of the mass of the polypropylene powder and the alkenyl-containing functional monomer, and the mass content of the organic solvent is 1-35% of the mass of the polypropylene powder.

**19.** The biaxially oriented polypropylene dielectric film as claimed in claim 18, wherein the preparation method of the modified polypropylene grafted with an alkenyl-containing functional monomer comprises the following steps:

a. placing a polypropylene powder in a closed reactor, followed by inert gas replacement;
b. adding a free radical initiator and an alkenyl-containing functional monomer to the closed reactor, and mixing with stirring;
c. adding deionized water, heating the reaction system to the grafting reaction temperature, to carry out the grafting reaction; optionally swelling the reaction system before or after adding deionized water;
d. after the end of the reaction, filtering and optionally drying to obtain a powder;
e. optionally, washing the powder by a washing solvent, filtering and drying;
f. obtaining the modified polypropylene grafted with an alkenyl-containing functional monomer; or
the preparation method of the modified polypropylene grafted with an alkenyl-containing functional monomer comprises the following steps:

a. placing a polypropylene powder in a closed reactor, followed by inert gas replacement;
b. mixing an organic solvent and a free radical initiator, and adding the mixture to the closed reactor;
c. removing the organic solvent, adding an alkenyl-containing functional monomer, and optionally swelling the reaction system;
d. adding deionized water, heating the reaction system to the grafting reaction temperature, to carry out the grafting reaction;
e. after the end of the reaction, filtering and optionally drying to obtain a powder;
f. optionally, washing the powder by a washing solvent, filtering and drying;
g. obtaining the modified polypropylene grafted with an alkenyl-containing functional monomer;

wherein, the temperature of the grafting reaction is 30-110°C, and preferably 60-95°C; the time is 0.5-10 h, and preferably 1-6 h.

**20.** The biaxially oriented polypropylene dielectric film as claimed in claim 17, wherein the method further comprises a step of screening pretreatment of the polypropylene powder, preferably, the screening pretreatment comprises the steps of screening the powder by using a double-layer vibrating screen or a linear screen with a screen mesh of a corresponding mesh number, and using the polypropylene powder in the middle layer of the screen as a reaction material.

**21.** The biaxially oriented polypropylene dielectric film as claimed in claim 17, wherein the washing solvent is one or a mixture of two or more selected from the group consisting of n-hexane, cyclohexane, n-heptane, petroleum ether, ethyl acetate, propyl acetate, isopropyl acetate, butyl acetate, acetone, methyl ethyl ketone, tetrahydrofuran, 2-methyl tetrahydrofuran, benzene, toluene and xylene; preferably, the washing solvent is a mixture of solvent A and solvent B, wherein the solvent A is at least one selected from the group consisting of n-hexane, cyclohexane, n-heptane, petroleum ether, ethyl acetate, propyl acetate, isopropyl acetate, butyl acetate, acetone, methyl ethyl ketone, tetrahydrofuran, and 2-methyl tetrahydrofuran, and the solvent B is at least one selected from the group consisting of toluene and xylene;
the mass of the washing solvent is 2-20 times of the mass of the grafted polypropylene powder.

**22.** The biaxially oriented polypropylene dielectric film as claimed in claim 17, wherein the washing temperature is 40-130°C, preferably 55-100°C, and the washing time is 0.5-10 h, preferably 1-8 h.

23. The biaxially oriented polypropylene dielectric film as claimed in any of claims 1-22, wherein the raw material for preparing the biaxially oriented polypropylene dielectric film further comprises an antioxidant and optionally a processing aid, wherein the content of the antioxidant is 0.1-0.8 part by weight, preferably 0.1-0.6 part by weight, and the content of the processing aid is 0.05-1 part by weight, preferably 0.05-0.5 part by weight, based on 100 parts by weight of the modified polypropylene; the content of the modified polypropylene grafted with an alkenyl-containing functional monomer is 50 wt% or more, preferably 60 wt% or more, more preferably 70 wt% or more, based on the weight of the dielectric film.

24. The biaxially oriented polypropylene dielectric film as claimed in claim 23, wherein the antioxidant is one or a mixture of two or more selected from the group consisting of hindered phenols, hindered amines, phosphites, thios, benzofuranones;

preferably, the antioxidant is obtained by compounding an antioxidant component A and an antioxidant component B, wherein the antioxidant component A is at least one selected from the group consisting of hindered phenols, hindered amines, phosphites and thios, and the antioxidant component B is at least one benzofuranone;
more preferably, the antioxidant component A is at least one selected from the group consisting of pentaerythrityl tetrakis[beta-(3,5-di-t-butyl-4-hydroxyphenyl) propionate], tris[2,4-di-t-butylphenyl] phosphite, n-octadecyl beta-(3,5-di-t-butyl-4-hydroxyphenyl) propionate, 2,2'-methylene bis(4-methyl-6-t-butylphenol), 2,2'-thiobis [3-(3,5-di-t-butyl-4- hydroxyphenyl) propionate], 1,1,3-tris (2-methyl-4-hydroxy-5-t-butylphenyl) butane, and bis(2,4-di-tert-butylphenol) pentaerythritol diphosphite; the antioxidant component B is at least one selected from the group consisting of 3-butyl-1-(3-hydrogen)-isobenzofuranone, 5-methyl-7-tert-butyl-3-(3,4-dimethyl)-3-hydrogen-benzofuran-2-one, 5-methyl-7-tert-butyl-3-(2,5-dimethyl)-3-hydrogen-benzofuran-2-one and 5-methyl-7-tert-butyl-3-(2-hydroxy-5-methyl)-3-hydrogen-benzofuran- 2-one;
the weight ratio of the antioxidant component A to the antioxidant component B is 1: 0.01-0.03.

25. The biaxially oriented polypropylene dielectric film as claimed in claim 23, wherein the processing aid is at least one selected from the group consisting of a lubricant, an acid acceptor, a slip agent, an antistatic agent and an antiblock agent;
the lubricant is at least one selected from the group consisting of polyethylene glycol lubricants, fluoropolymer lubricants, organosilicon lubricants, fatty alcohol lubricants, fatty acid lubricants, fatty acid ester lubricants, stearic acid amide lubricants, fatty acid metal soap lubricants, alkane and oxidized alkane lubricants and micro-nano particle lubricants.

26. The biaxially oriented polypropylene dielectric film as claimed in any of claims 1-25, wherein the biaxially oriented polypropylene dielectric film is prepared by a method comprising the steps of:

(1) mixing and pelletizing raw materials for the preparation;
(2) melt extruding the pellets obtained in step (1) and casting, to obtain a modified polypropylene cast sheet;
(3) biaxially stretching the modified polypropylene cast sheet to obtain the biaxially oriented polypropylene dielectric film.

27. A modified polypropylene material for preparing dielectric films, **characterized in that**: the modified polypropylene material comprises a modified polypropylene grafted with an alkenyl-containing functional monomer, wherein the modified polypropylene grafted with an alkenyl-containing functional monomer comprises structural units derived from polypropylene as a matrix phase and structural units derived from the alkenyl-containing functional monomer as a dispersion phase; the modified polypropylene grafted with an alkenyl-containing functional monomer has an ash content of less than 50 ppm, preferably less than 36 ppm, and more preferably less than 30 ppm; the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is more than or equal to 1.0; the D50 of the dispersion phase is less than 450 nm, preferably 50-400 nm.

28. The modified polypropylene material as claimed in claim 27, wherein the maximum working temperature of the modified polypropylene material is ≥ 100°C, preferably 110-160°C, and more preferably 120-145°C.

29. The modified polypropylene material as claimed in claim 27 or 28, wherein the modified polypropylene material has at least one of the following characteristics:

- the breakdown field strength $E_g$ at 120°C is ≥ 500 MV/m, preferably 550-800 MV/m;
- the direct current volume resistivity $\rho_{vg}$ at 120°C and 200 MV/m field strength is ≥ $6.0\times10^{13}$ $\Omega\cdot$m, preferably $1.0\times10^{14}$ $\Omega\cdot$m -1.0 $\times10^{20}$ $\Omega\cdot$m, preferably $1.5\times10^{14}$ $\Omega\cdot$m-0.9 $\times10^{20}$ $\Omega\cdot$m, more preferably $2.0\times10^{14}$ $\Omega\cdot$m-1.0 $\times10^{17}$ $\Omega\cdot$m;
- the dielectric constant at 120°C and 100 Hz is more than 2.25, preferably 2.26-2.65;
- the dielectric loss at 120°C and 100 Hz is less than 1.55E-3, preferably less than 1.5E-3, preferably less than or equal to 1.0E-3, more preferably 1.0E-6 to 1.3E-3, and further preferably 1.0E-6 to 9E-4;
- the energy storage density at 120°C and 300 MV/m is more than 0.720 J/cm$^3$, preferably 0.740-2.0 J/cm$^3$, more preferably 0.780-2.0 J/cm$^3$, and further preferably 0.80-2.0 J/cm$^3$;
- the energy storage efficiency at 120°C and 300 MV/m is more than 90.0%, and preferably 92.0-99.0%.

**30.** The modified polypropylene material as claimed in claim 27, wherein the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is 1.1-1.0, preferably 1.2-6.

**31.** The modified polypropylene material as claimed in claim 27, wherein the ratio of the mass of the structural units derived from the alkenyl-containing functional monomer and in a grafted state to the mass of the structural units derived from the alkenyl-containing functional monomer and in a self-polymerized state, in the modified polypropylene grafted with an alkenyl-containing functional monomer, is more than or equal to 1.5, preferably more than or equal to 2.

**32.** The modified polypropylene material as claimed in any of claims 27-31, wherein the modified polypropylene grafted with an alkenyl-containing functional monomer has at least one of the following characteristics: the melt flow rate at the load of 2.16 kg at 230°C is 1-10 g/10 min, preferably 1.5-8 g/10 min, and further preferably 2-5 g/10 min; the melting temperature $T_m$ is 155-168°C, and preferably 157-165°C; the flexural modulus is 1400-2000 MPa, preferably 1500-1800 MPa.

**33.** The modified polypropylene material as claimed in any of claims 27-32, wherein the alkenyl-containing functional monomer is at least one selected from monomers having a structure represented by the formula 1,

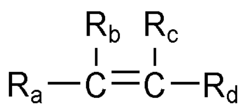 formula 1

in the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano, substituted or unsubstituted silyl; $R_a$ and $R_d$ optionally form a ring.

**34.** The modified polypropylene material as claimed in claim 33, wherein $R_b$, $R_c$, $R_d$ are each independently selected from H, substituted or unsubstituted $C_1$-$C_6$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano, substituted or unsubstituted $C_3$-$C_{20}$ silyl; the substituent group is halogen, -OH, $-NH_2$, =O, $C_1$-$C_{12}$ alkyl, $C_3$-$C_6$ cycloalkyl, $C_1$-$C_{12}$ alkoxy, $C_1$-$C_{12}$ acyloxy; $R_a$ and $R_d$ optionally taken together with the double bond form a 4-6 membered heterocyclic ring.

**35.** The modified polypropylene material as claimed in claim 34, wherein $R_b$, $R_c$, $R_d$ are each independently selected from H, substituted or unsubstituted $C_1$-$C_6$ alkyl;

$R_a$ is at least one selected from a group represented by formula 2, a group represented by formula 3, a group represented by formula 4, a group represented by formula 5, a group represented by formula 6 and a heterocyclic group;

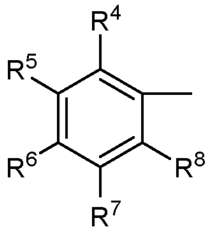

formula 2

in the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

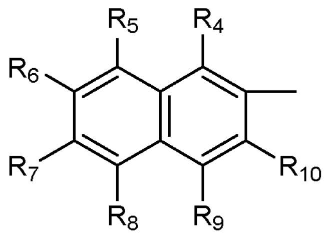

formula 3

in the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

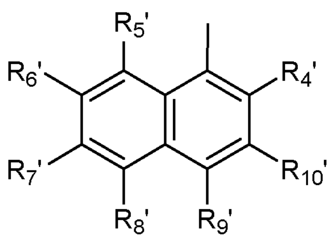

formula 4

in the formula 4, $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$'-$R_{10}$' are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

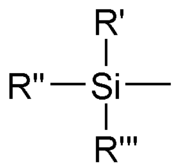

formula 5

in the formula 5, R', R", R‴ are each independently selected from substituted or unsubstituted $C_1$-$C_{12}$ linear alkyl, substituted or unsubstituted $C_3$-$C_{12}$ branched alkyl, substituted or unsubstituted $C_1$-$C_{12}$ alkoxy, substituted or unsubstituted $C_1$-$C_{12}$ acyloxy; preferably, $R_1$ is $C_2$-$C_6$ alkenyl, preferably monounsaturated alkenyl; $R_2$, $R_3$, $R_4$ are each independently selected from substituted or unsubstituted $C_1$-$C_6$ linear alkyl, substituted or unsubstituted $C_3$-$C_6$ branched alkyl, substituted or unsubstituted $C_1$-$C_6$ alkoxy, substituted or unsubstituted $C_1$-$C_6$ acyloxy;

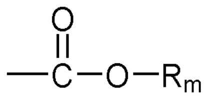 formula 6

in the formula 6, $R_m$ is selected from hydrogen and/or the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is at least one selected from halogen, amino and hydroxy;
the heterocyclic group is selected from imidazolyl, pyrazolyl, carbazolyl, pyrrolidinonyl, pyridyl, piperidinyl, caprolactamyl, pyrazinyl, thiazolyl, purinyl, morpholinyl, oxazolinyl.

**36.** The modified polypropylene material as claimed in claim 35, wherein the alkenyl-containing functional monomer is a styrenic monomer, the styrenic monomer is at least one selected from styrene, α-methylstyrene,1-vinyl naphthalene, 2-vinyl naphthalene, mono- or polysubstituted styrene, mono- or polysubstituted α-methylstyrene,mono- or polysubstituted 1-vinyl naphthalene and mono- or polysubstituted 2-vinyl naphthalene; the substituent group preferably is at least one selected from halogen, hydroxy, amino, phosphoric group, sulfonic group, $C_1$-$C_8$ linear alkyl, $C_3$-$C_8$ branched alkyl or cycloalkyl, $C_1$-$C_6$ linear alkoxy, $C_3$-$C_8$ branched alkoxy or cycloalkoxy, $C_1$-$C_8$ linear ester group, $C_3$-$C_8$ branched ester group or cyclic ester group, $C_1$-$C_8$ linear amine group and $C_3$-$C_8$ branched amine group or cyclic amine group; preferably, the styrenic monomer is at least one selected from styrene, α-methylstyrene, 2-methylstyrene, 3-methylstyrene and 4-methylstyrene.

**37.** The modified polypropylene material as claimed in claim 35, wherein the alkenyl-containing functional monomer is an alkenyl-containing silane monomer, the alkenyl-containing silane monomer is at least one selected from vinyltriethoxysilane, vinyltrimethoxysilane, vinyltriisopropoxysilane, vinyltri-tert-butoxysilane, vinyltriacetoxysilane, methylvinyldimethoxysilane, ethylvinyldiethoxysilane, allyltriethoxysilane, allyltrimethoxysilane, allyltriisopropoxysilane, vinyltris (β-methoxyethoxy)silane, allyltris (β-methoxyethoxy)silane, allyltri-tert-butoxysilane, allyltriacetoxysilane, methylallyldimethoxysilane and ethylallyldiethoxysilane.

**38.** The modified polypropylene material as claimed in claim 35, wherein the alkenyl-containing functional monomer is an acrylate monomer and/or an acrylic monomer, preferably, the acrylate monomer is at least one selected from methyl (methyl)acrylate, sec-butyl (methyl)acrylate, ethyl (methyl)acrylate, n-butyl (methyl)acrylate, isobutyl (methyl)acrylate, tert-butyl (methyl)acrylate, isooctyl (methyl)acrylate, dodecyl (methyl)acrylate, cocinin (methyl)acrylate, octadecyl (methyl)acrylate, dimethylaminoethyl (methyl)acrylate, diethylaminoethyl (methyl)acrylate, dimethylaminopropyl (methyl)acrylate, and glycidyl (methyl)acrylate; preferably, the acrylic monomer is at least one selected from acrylic acid, methacrylic acid and 2-ethylacrylic acid.

**39.** The modified polypropylene material as claimed in claim 34, wherein the alkenyl-containing functional monomer is at least one selected from maleic anhydride, maleimide and derivatives thereof, itaconic anhydride, and α-methylene-γ-butyrolactone; preferably, the alkenyl-containing functional monomer is maleic anhydride.

**40.** The modified polypropylene material as claimed in any of claims 27-39, wherein the polypropylene has the following characteristics: the particle size is 16-50 meshes; the ash content is less than 55 ppm, preferably less than 40 ppm, more preferably less than 35 ppm; the flexural modulus is 1400-2000 MPa, preferably 1500-1800 MPa.

**41.** The modified polypropylene material as claimed in any of claims 27-40, wherein the polypropylene is a homopolypropylene or a propylene copolymer, and preferably has at least one of the following characteristics:

- the melt flow rate at the load of 2.16 kg at 230°C is 0.5-10 g/10 min, preferably 1-5 g/10 min, and further preferably 2-4 g/10 min;
- the melting temperature $T_m$ is 150°C or higher, preferably 153-180°C, further preferably 155-167°C;
- the isotacticity is more than 96%, preferably more than 96.5%; or, the total content of ethylene units and butene units is less than 3.0 mol%, preferably more than 0 and less than 0.1 mol%, or more than 0.1 mol% and less than or equal to 3.0 mol%.

**42.** The modified polypropylene material as claimed in any of claims 27-41, wherein the modified polypropylene grafted with an alkenyl-containing functional monomer is prepared by a method comprising the following steps: in the presence of an inert gas, a reaction mixture comprising a polypropylene powder and an alkenyl-containing functional monomer is subjected to grafting reaction, and is optionally washed by a washing solvent, to obtain the modified polypropylene grafted with an alkenyl-containing functional monomer.

**43.** The modified polypropylene material as claimed in claim 42, wherein the reaction mixture further comprises a free radical initiator and at least one of the following components: deionized water and/or an organic solvent, wherein the mass content of the deionized water is 300-800% of the sum of the mass of the polypropylene powder and the alkenyl-containing functional monomer, and the mass content of the organic solvent is 1-35% of the mass of the polypropylene powder.

**44.** The modified polypropylene material as claimed in claim 43, wherein the preparation method of the modified polypropylene grafted with an alkenyl-containing functional monomer comprises the following steps:

a. placing a polypropylene powder in a closed reactor, followed by inert gas replacement;
b. adding a free radical initiator and an alkenyl-containing functional monomer to the closed reactor, and mixing with stirring;
c. adding deionized water, heating the reaction system to the grafting reaction temperature, to carry out the grafting reaction; optionally swelling the reaction system before or after adding deionized water;
d. after the end of the reaction, filtering and optionally drying to obtain a powder;
e. optionally, washing the powder by a washing solvent, filtering and drying;
f. obtaining the modified polypropylene grafted with an alkenyl-containing functional monomer; or
the preparation method of the modified polypropylene grafted with an alkenyl-containing functional monomer comprises the following steps:

a. placing a polypropylene powder in a closed reactor, followed by inert gas replacement;
b. mixing an organic solvent and a free radical initiator, and adding the mixture to the closed reactor;
c. removing the organic solvent, adding an alkenyl-containing functional monomer, and optionally swelling the reaction system;
d. adding deionized water, heating the reaction system to the grafting reaction temperature, to carry out the grafting reaction;
e. after the end of the reaction, filtering and optionally drying to obtain a powder;
f. optionally, washing the powder by a washing solvent, filtering and drying;
g. obtaining the modified polypropylene grafted with an alkenyl-containing functional monomer;

wherein, the temperature of the grafting reaction is 30-110°C, and preferably 60-95°C; the time is 0.5-10 h, and preferably 1-6 h.

**45.** The modified polypropylene material as claimed in claim 42, wherein the method further comprises a step of screening pretreatment of the polypropylene powder, preferably, the screening pretreatment comprises the steps of screening the powder by using a double-layer vibrating screen or a linear screen with a screen mesh of a corresponding mesh number, and using the polypropylene powder in the middle layer of the screen as a reaction material.

**46.** The modified polypropylene material as claimed in claim 42, wherein the washing solvent is one or a mixture of two or more selected from the group consisting of n-hexane, cyclohexane, n-heptane, petroleum ether, ethyl acetate, propyl acetate, isopropyl acetate, butyl acetate, acetone, methyl ethyl ketone, tetrahydrofuran, 2-methyl tetrahydrofuran, benzene, toluene and xylene; preferably, the washing solvent is a mixture of solvent A and solvent B, wherein the solvent A is at least one selected from the group consisting of n-hexane, cyclohexane, n-heptane, petroleum ether, ethyl acetate, propyl acetate, isopropyl acetate, butyl acetate, acetone, methyl ethyl ketone, tetrahydrofuran, and 2-methyl tetrahydrofuran, and the solvent B is at least one selected from the group consisting of toluene and xylene; the mass of the washing solvent is 2-20 times of the mass of the grafted polypropylene powder.

**47.** The modified polypropylene material as claimed in claim 42, wherein the washing temperature is 40-130°C, preferably 55-100°C, and the washing time is 0.5-10 h, preferably 1-8 h.

**48.** The modified polypropylene material as claimed in any of claims 27-47, **characterized in that** the modified polypropylene material also comprise an antioxidant and optionally a processing aid, wherein the content of the

antioxidant is 0.1-0.8 part by weight, preferably 0.1-0.6 part by weight, and the content of the processing aid is 0.05-1 part by weight, preferably 0.05-0.5 part by weight, based on 100 parts by weight of the modified polypropylene.

**49.** The modified polypropylene material as claimed in claim 48, wherein the antioxidant is one or a mixture of two or more selected from the group consisting of hindered phenols, hindered amines, phosphites, thios, benzofuranones;

preferably, the antioxidant is obtained by compounding an antioxidant component A and an antioxidant component B, wherein the antioxidant component A is at least one selected from the group consisting of hindered phenols, hindered amines, phosphites and thios, and the antioxidant component B is at least one benzofuranone;
more preferably, the antioxidant component A is at least one selected from the group consisting of pentaerythrityl tetrakis [beta-(3,5-di-t-butyl-4-hydroxyphenyl) propionate], tris[2,4-di-t-butylphenyl] phosphite, n-octadecyl beta-(3,5-di-t-butyl-4-hydroxyphenyl) propionate, 2,2'-methylene bis(4-methyl-6-t-butylphenol), 2,2'-thiobis [3-(3,5-di-t-butyl-4- hydroxyphenyl) propionate], 1,1,3-tris (2-methyl-4-hydroxy-5-t-butylphenyl) butane, and bis(2,4-di-tert-butylphenol) pentaerythritol diphosphite; the antioxidant component B is at least one selected from the group consisting of 3-butyl-1-(3-hydrogen)-isobenzofuranone, 5-methyl-7-tert-butyl-3-(3,4-dimethyl)-3-hydrogen-benzofuran-2-one, 5-methyl-7-tert-butyl-3-(2,5-dimethyl)-3-hydrogen-benzofuran-2-one and 5-methyl-7-tert-butyl-3-(2-hydroxy-5-methyl)-3-hydrogen-benzofuran- 2-one;
the weight ratio of the antioxidant component A to the antioxidant component B is 1: 0.01-0.03.

**50.** The modified polypropylene material as claimed in claim 48, wherein the processing aid is at least one selected from the group consisting of a lubricant, an acid acceptor, a slip agent, an antistatic agent and an antiblock agent;
the lubricant is at least one selected from the group consisting of polyethylene glycol lubricants, fluoropolymer lubricants, organosilicon lubricants, fatty alcohol lubricants, fatty acid lubricants, fatty acid ester lubricants, stearic acid amide lubricants, fatty acid metal soap lubricants, alkane and oxidized alkane lubricants and micro-nano particle lubricants.

**51.** Use of the biaxially oriented polypropylene dielectric film as claimed in any of claims 1-26, the modified polypropylene material as claimed in any of claims 27-50 in the production of an energy storage dielectric medium, in particular a high temperature energy storage dielectric medium, wherein the dielectric medium is preferably a monolayer/multilayer dielectric film, preferably a capacitor film, an electrical film, a rough film, a supercapacitor film, an electrostatic film, or a battery separator film.

**52.** A polypropylene capacitor film, being a monolayer or a multilayer, wherein at least one layer is the biaxially oriented polypropylene dielectric film as claimed in any of claims 1-26, or wherein at least one layer is made of raw materials containing the modified polypropylene material as claimed in any of claims 27-50, preferably by biaxial stretching, preferably wherein at least one layer is made of the modified polypropylene material as claimed in any of claims 27-50 by biaxial stretching.

**53.** A polypropylene electrical film, being a monolayer or a multilayer, wherein at least one layer is the biaxially oriented polypropylene dielectric film as claimed in any of claims 1-26, or wherein at least one layer is made of raw materials containing the modified polypropylene material as claimed in any of claims 27-50, preferably by biaxial stretching, preferably wherein at least one layer is made of the modified polypropylene material as claimed in any of claims 27-50 by biaxial stretching.

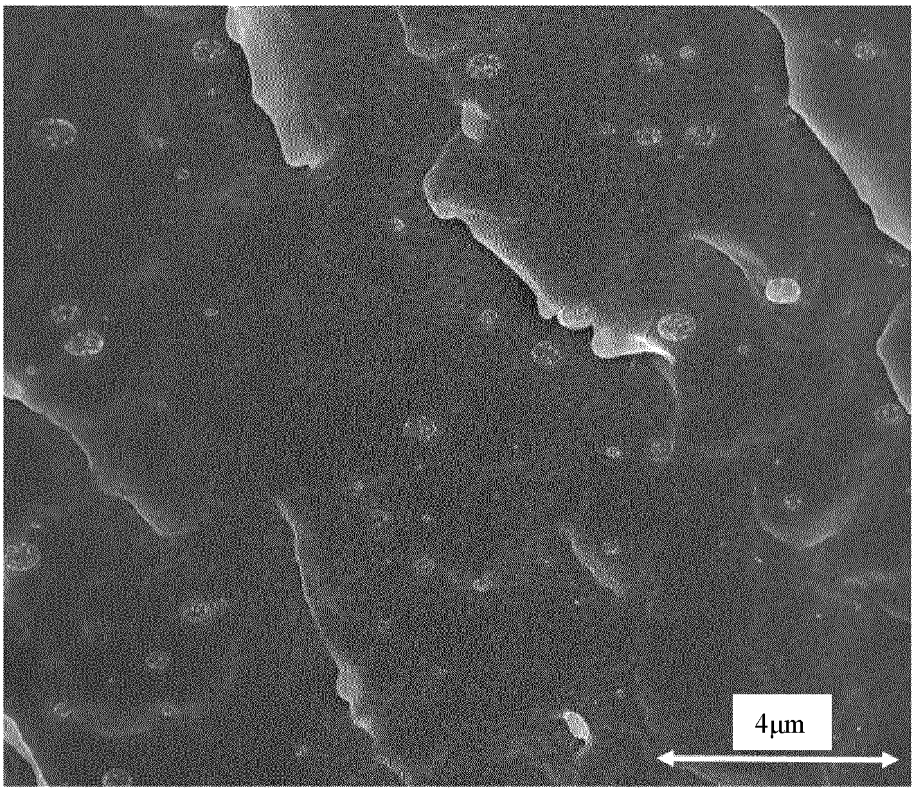


Fig. 1

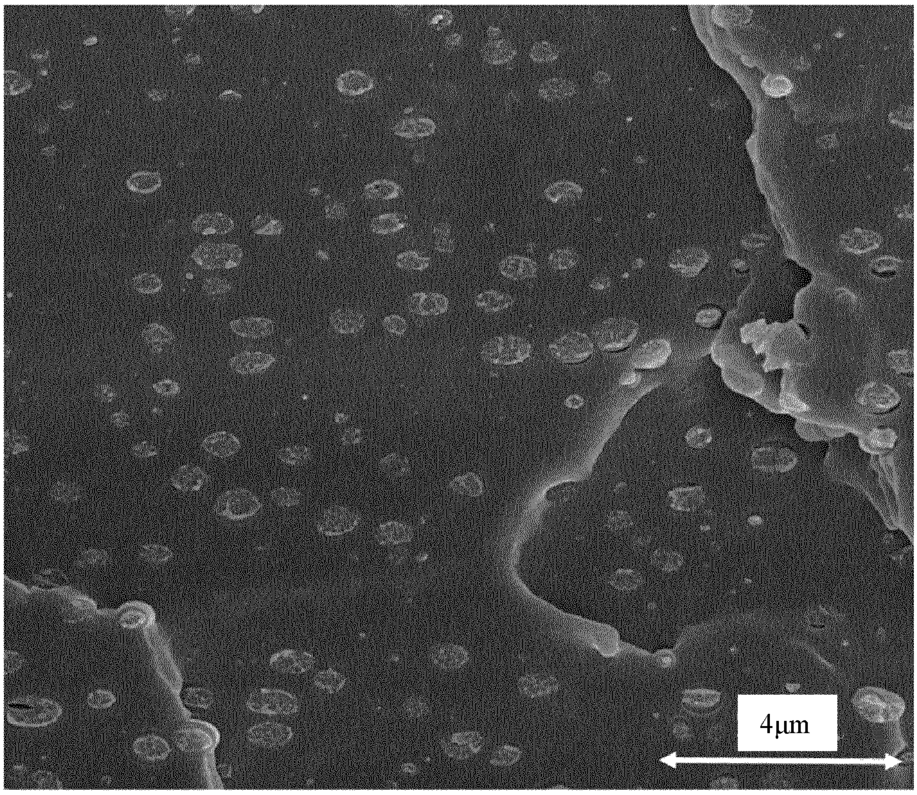


Fig. 2

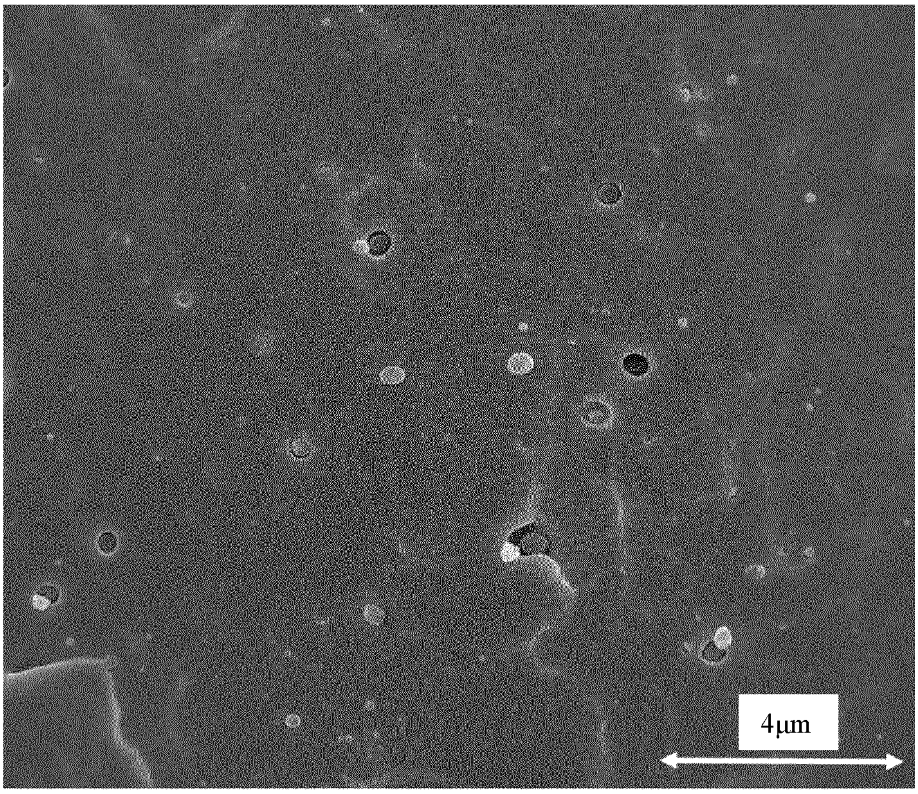


Fig. 3

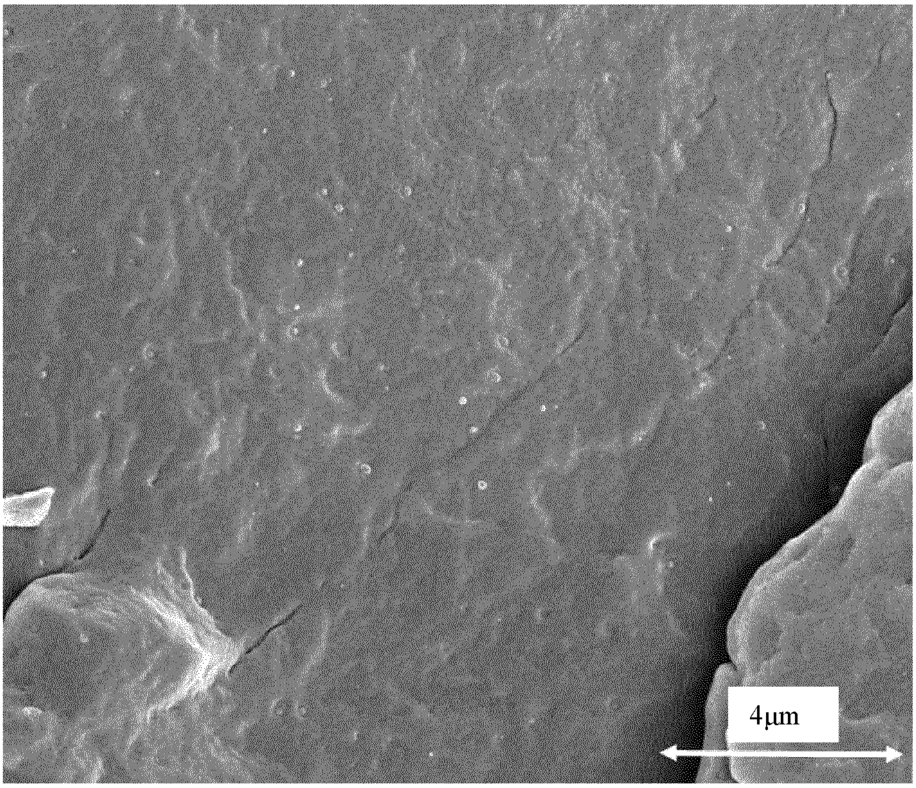


Fig. 4

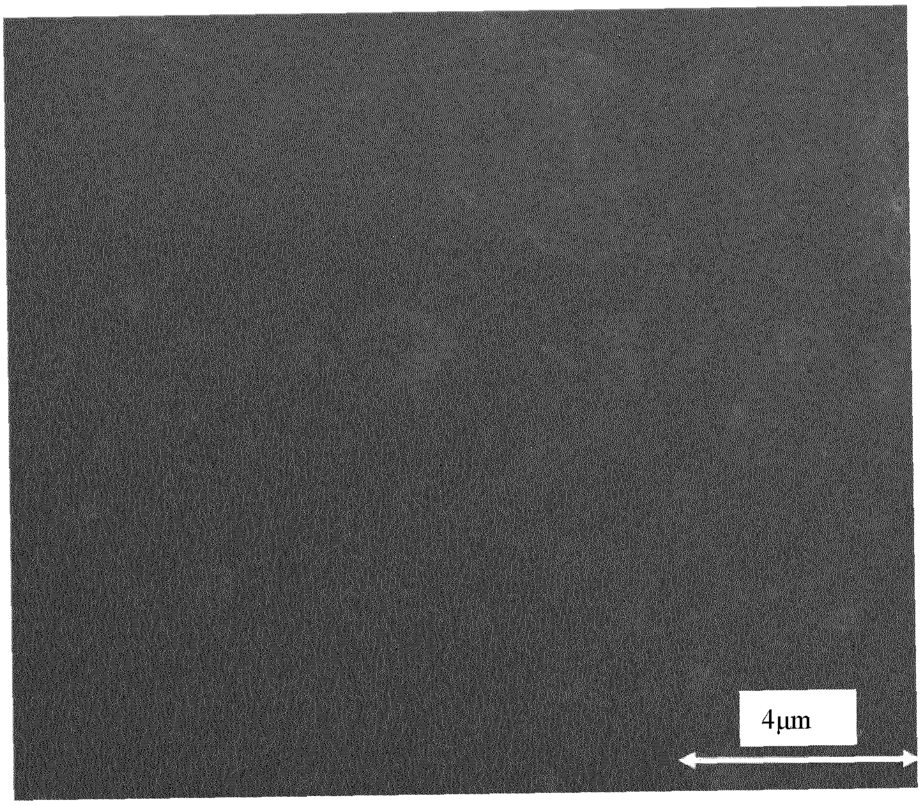
4μm

Fig. 5

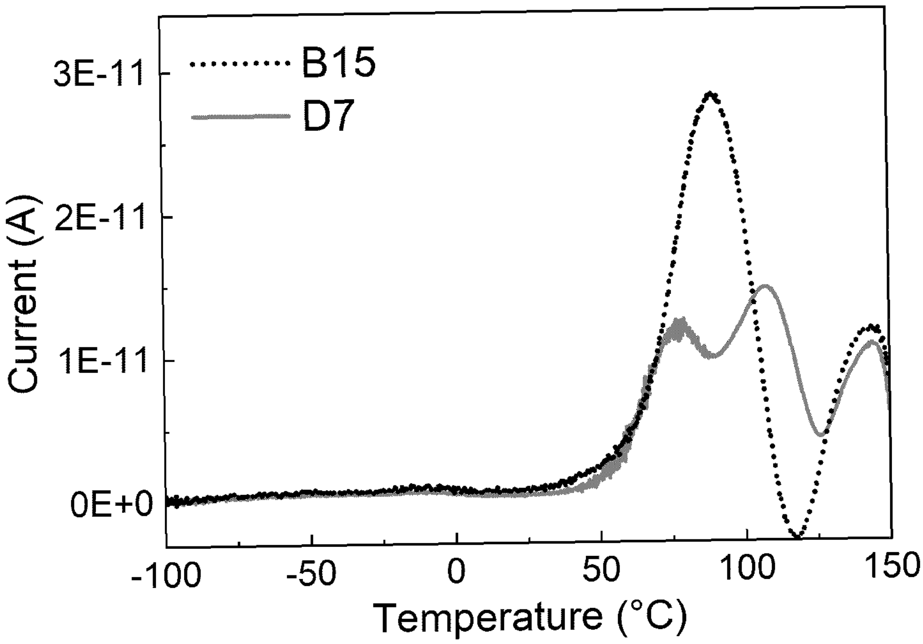
B15
D7
3E-11
2E-11
1E-11
0E+0
Current (A)
-100
-50
0
50
100
150
Temperature (°C)

Fig. 6

## INTERNATIONAL SEARCH REPORT

International application No.
**PCT/CN2022/133482**

**A. CLASSIFICATION OF SUBJECT MATTER**

H01B 3/30(2006.01)i; B32B 27/32(2006.01)i; B29C 55/12(2006.01)i; C08J 5/18(2006.01)i; C08F 222/06(2006.01)i; C08F 255/02(2006.01)i; C08F 212/08(2006.01)i; C08F 230/08(2006.01)i

According to International Patent Classification (IPC) or to both national classification and IPC

**B. FIELDS SEARCHED**

Minimum documentation searched (classification system followed by classification symbols)

H01B, B32B, B29C, C08J, C08F

Documentation searched other than minimum documentation to the extent that such documents are included in the fields searched

Electronic data base consulted during the international search (name of data base and, where practicable, search terms used)

CNABS; CNTXT; VEN; ENTXT; ENTXTC; STN; CNKI; Web of Science: 聚丙烯, 双向拉伸, 纵横拉伸, 横纵拉伸, 双轴拉伸, 膜, 灰分, 灰份, 接枝, 接枝效率, 接枝率, 海相, 岛相, 海岛, 分散相, 连续相, 基体相, 苯乙烯, 乙烯基萘, 乙烯基, 氧基硅烷, 烯丙基, 丙烯基, 丙烯酸, 马来酸酐, 顺丁烯二酸酐, 顺酐, 马来酰亚胺, 衣康酸酐, 丁内酯, 介电, 绝缘, 电工, 电容, polypropylene, PP, biaxial stretch, two-way stretch, film, ash, graft, efficiency, sea phase, island phase, sea-island, island-sea, dispersed phase, continuous phase, matrix phase, styrene, vinylnaphthalene, vinyl, allyl, acryl, oxysilane, acrylic, maleic anhydride, maleimide, dielectric, insulation, itaconic anhydride, butyrolactone

**C. DOCUMENTS CONSIDERED TO BE RELEVANT**

| Category* | Citation of document, with indication, where appropriate, of the relevant passages | Relevant to claim No. |
|---|---|---|
| A | CN 108699265 A (TORAY INDUSTRIES, INC.) 23 October 2018 (2018-10-23)<br>entire document | 1-53 |
| A | CN 113563520 A (CHINA PETROLEUM AND CHEMICAL CORP. et al.) 29 October 2021 (2021-10-29)<br>entire document | 1-53 |
| A | CN 113563524 A (CHINA PETROLEUM AND CHEMICAL CORP. et al.) 29 October 2021 (2021-10-29)<br>entire document | 1-53 |
| A | CN 113563525 A (CHINA PETROLEUM AND CHEMICAL CORP. et al.) 29 October 2021 (2021-10-29)<br>entire document | 1-53 |
| A | CN 113563526 A (CHINA PETROLEUM AND CHEMICAL CORP. et al.) 29 October 2021 (2021-10-29)<br>entire document | 1-53 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 January 2023** | **28 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT

International application No.
**PCT/CN2022/133482**

**C. DOCUMENTS CONSIDERED TO BE RELEVANT**

| Category* | Citation of document, with indication, where appropriate, of the relevant passages | Relevant to claim No. |
|---|---|---|
| A | CN 113563527 A (CHINA PETROLEUM AND CHEMICAL CORP. et al.) 29 October 2021 (2021-10-29)<br>entire document | 1-53 |
| A | CN 113563528 A (CHINA PETROLEUM AND CHEMICAL CORP. et al.) 29 October 2021 (2021-10-29)<br>entire document | 1-53 |
| A | CN 113563529 A (CHINA PETROLEUM AND CHEMICAL CORP. et al.) 29 October 2021 (2021-10-29)<br>entire document | 1-53 |
| A | CN 111072855 A (CHINA PETROLEUM AND CHEMICAL CORP. et al.) 28 April 2020 (2020-04-28)<br>entire document | 1-53 |
| A | WO 2021218102 A1 (CHINA PETROLEUM AND CHEMICAL CORP. et al.) 04 November 2021 (2021-11-04)<br>entire document | 1-53 |
| A | WO 2021218104 A1 (CHINA PETROLEUM AND CHEMICAL CORP. et al.) 04 November 2021 (2021-11-04)<br>entire document | 1-53 |
| A | CN 101786332 A (CANGZHOU MINGZHU PLASTIC CO., LTD.) 28 July 2010 (2010-07-28)<br>entire document | 1-53 |
| A | JP 2004214641 A (DAINIPPON PRINTING CO., LTD.) 29 July 2004 (2004-07-29)<br>entire document | 1-53 |
| A | CN 104804143 A (EAST CHINA UNIVERSITY OF SCIENCE AND TECHNOLOGY) 29 July 2015 (2015-07-29)<br>entire document | 1-53 |
| A | CN 103052661 A (BOREALIS AG) 17 April 2013 (2013-04-17)<br>entire document | 1-53 |
| A | JP 2014210841 A (KANEKA CORP.) 13 November 2014 (2014-11-13)<br>entire document | 1-53 |
| A | CN 103764732 A (BOREALIS AG) 30 April 2014 (2014-04-30)<br>entire document | 1-53 |
| A | CN 1198759 A (TORAY INDUSTRIES, INC.) 11 November 1998 (1998-11-11)<br>entire document | 1-53 |
| A | CN 101600757 A (TEIJIN DUPONT FILMS JAPAN LTD.) 09 December 2009 (2009-12-09)<br>entire document | 1-53 |
| A | CN 103155207 A (TOPPAN PRINTING CO., LTD.) 12 June 2013 (2013-06-12)<br>entire document | 1-53 |
| A | CN 109694428 A (CHINA PETROLEUM AND CHEMICAL CORP. et al.) 30 April 2019 (2019-04-30)<br>entire document | 1-53 |
| A | CN 109694429 A (CHINA PETROLEUM AND CHEMICAL CORP. et al.) 30 April 2019 (2019-04-30)<br>entire document | 1-53 |

Form PCT/ISA/210 (second sheet) (January 2015)

**INTERNATIONAL SEARCH REPORT**
**Information on patent family members**

International application No.
**PCT/CN2022/133482**

| Patent document cited in search report | Publication date (day/month/year) | Patent family member(s) | Publication date (day/month/year) |
|---|---|---|---|
| CN 108699265 A | 23 October 2018 | EP 3431530 A1 | 23 January 2019 |
| | | JP WO2017159103 A1 | 17 January 2019 |
| | | WO 2017159103 A1 | 21 September 2017 |
| | | KR 20180126448 A | 27 November 2018 |
| CN 113563520 A | 29 October 2021 | None | |
| CN 113563524 A | 29 October 2021 | None | |
| CN 113563525 A | 29 October 2021 | None | |
| CN 113563526 A | 29 October 2021 | None | |
| CN 113563527 A | 29 October 2021 | None | |
| CN 113563528 A | 29 October 2021 | None | |
| CN 113563529 A | 29 October 2021 | None | |
| CN 111072855 A | 28 April 2020 | None | |
| WO 2021218102 A1 | 04 November 2021 | BR 112022021981 A2 | 13 December 2022 |
| | | CA 3181482 A1 | 04 November 2021 |
| | | TW 202140589 A | 01 November 2021 |
| | | AU 2020444841 A1 | 08 December 2022 |
| WO 2021218104 A1 | 04 November 2021 | TW 202140590 A | 01 November 2021 |
| | | AU 2020445735 A1 | 08 December 2022 |
| CN 101786332 A | 28 July 2010 | None | |
| JP 2004214641 A | 29 July 2004 | None | |
| CN 104804143 A | 29 July 2015 | None | |
| CN 103052661 A | 17 April 2013 | IN 124KOLNP2013 A | 05 July 2013 |
| | | ES 2398714 T3 | 21 March 2013 |
| | | EP 2415791 A1 | 08 February 2012 |
| | | US 2013303684 A1 | 14 November 2013 |
| | | EA 201300203 A1 | 30 August 2013 |
| | | MX 2013001340 A | 08 March 2013 |
| | | WO 2012016964 A1 | 09 February 2012 |
| | | JP 2013538258 A | 10 October 2013 |
| | | KR 20130059406 A | 05 June 2013 |
| | | BR 112013002730 A2 | 31 May 2016 |
| | | MX 328196 B | 02 March 2015 |
| JP 2014210841 A | 13 November 2014 | None | |
| CN 103764732 A | 30 April 2014 | JP 2014531480 A | 27 November 2014 |
| | | EP 2565221 A1 | 06 March 2013 |
| | | SG 2014011357 A | 28 August 2014 |
| | | WO 2013030210 A1 | 07 March 2013 |
| | | KR 20140054348 A | 08 May 2014 |
| | | US 2014220236 A1 | 07 August 2014 |
| CN 1198759 A | 11 November 1998 | DE 69714022 D1 | 22 August 2002 |
| | | CA 2229778 A1 | 19 February 1998 |
| | | WO 9806776 A1 | 19 February 1998 |
| | | KR 19990064089 A | 26 July 1999 |
| | | EP 0885918 A1 | 23 December 1998 |
| | | US 6094337 A | 25 July 2000 |
| CN 101600757 A | 09 December 2009 | US 2010062239 A1 | 11 March 2010 |
| | | WO 2008093885 A1 | 07 August 2008 |
| | | EP 2128189 A1 | 02 December 2009 |

Form PCT/ISA/210 (patent family annex) (January 2015)

**INTERNATIONAL SEARCH REPORT**
**Information on patent family members**

International application No.
**PCT/CN2022/133482**

| Patent document cited in search report | Publication date (day/month/year) | Patent family member(s) | Publication date (day/month/year) |
|---|---|---|---|
| | | JP WO2008093885 A1 | 20 May 2010 |
| | | KR 20090113315 A | 29 October 2009 |
| CN 103155207 A | 12 June 2013 | JP 2014139945 A | 31 July 2014 |
| | | JP 2013258162 A | 26 December 2013 |
| | | TW 201230449 A | 16 July 2012 |
| | | JP 2018022690 A | 08 February 2018 |
| | | KR 20130118867 A | 30 October 2013 |
| | | JP WO2012050182 A1 | 24 February 2014 |
| | | JP 2014146603 A | 14 August 2014 |
| | | HK 1183164 A1 | 13 December 2013 |
| | | WO 2012050182 A1 | 19 April 2012 |
| | | EP 2629348 A1 | 21 August 2013 |
| | | US 2013209868 A1 | 15 August 2013 |
| | | JP 2014130845 A | 10 July 2014 |
| CN 109694428 A | 30 April 2019 | None | |
| CN 109694429 A | 30 April 2019 | None | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 111378229 A
- CN 202011292440
- CN 109694427 A
- CN 109694428 A
- CN 104558813 A
- CN 109912734 A
- CN 111019025 A
- CN 105431459 A
- CN 106543369 A
- CN 104499281 A
- CN 102108112 A
- CN 109251270 A
- CN 1884326 A
- CN 101492517 B
- CN 109694429 A


### Non-patent literature cited in the description


- **Y PAN et al.** Solid-phase grafting of glycidyl methacrylate onto polypropylene. *Journal of Applied Polymer Science*, 1997, vol. 65 (10), 1905-1912
- **LI QIAOJUN et al.** Studies on Suspension Grafting of Styrene onto Polypropylene. *Synthetic Resins and Plastics*, 1996, vol. 13 (1), 7-10
- **ZHU BAODONG et al.** Grafting of Styrene and Maleic Anhydride onto Polypropylene in Water Suspension System. *Modem Plastics Processing and Applications*, 2009, vol. 5, 3
- **YUAN, C** ; **ZHOU, Y** ; **ZHU, Y et al.** Polymer/molecular semiconductor all-organic composites for high-temperature dielectric energy storage. *Nat. Commun.*, 2020, vol. 11, 3919
- **YUAN, C** ; **ZHOU, Y** ; **ZHU, Y et al.** Polymer/molecular semiconductor all-organic composites for high-temperature dielectric energy storage.. *Nat. Commun.*, 2020, vol. 11, 3919
- **TIAN FUQIANG** ; **BU WENBIN** ; **SHI LINSHUANG et al.** Theory of modified thermally stimulated current and direct determination of trap level distribution[J].. *Journal of Electrostatics*, 2011, vol. 69 (1), 7-10